(19) Europäisches Patentamt
European Patent Office
Office européen des brevets

(11) EP 1 858 276 B1

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(51) Int Cl.:
***H04W 72/12*** *(2009.01)*

(21) Anmeldenummer: **06009993.4**

(22) Anmeldetag: **15.05.2006**

(54) **Schnittstelle zur effizienten Übertragung von digitalen Signalen**

Interface for efficiently transmitting digital signals

Interface pour la transmission efficace de signaux numériques

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**21.11.2007 Patentblatt 2007/47**

(73) Patentinhaber: **Nokia Solutions and Networks GmbH & Co. KG**
**81541 Munich (DE)**

(72) Erfinder:
- **Hassler, Bernd, Dr.**
  **89171 Illerkirchberg (DE)**
- **Splett, Armin, Dr.**
  **89081 Ulm (DE)**
- **Wolff, Gunter, Dr.**
  **89081 Ulm (DE)**

(74) Vertreter: **Nokia EPO representatives et al**
**Nokia Technologies Oy**
**Karaportti 3**
**02610 Espoo (FI)**

(56) Entgegenhaltungen:
**EP-A- 0 485 260** **EP-A- 1 052 794**
**WO-A-2005/048624** **WO-A-2005/048625**
**WO-A-2006/040653** **DE-A1- 10 344 278**

- **ERICSSON AB; HUAWEI TECHNOLOGIES CO. LTD;NEC CORPORATION; NORTEL NETWORKS SA AND SIEMENS AG: "Common Public Radio Interface (CPRI); Interface Specification V2.1" CPRI SPECIFICATION V2.1, [Online] 31. März 2006 (2006-03-31), Seiten 1-76, XP002399827 www.cpri.info Gefunden im Internet: URL:www.cpri.info/downloads/CPRI_Specification_V_2_1.pdf> [gefunden am 2006-09-18]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 858 276 B1

Printed by Jouve, 75001 PARIS (FR)

**Beschreibung**

Die Erfindung betrifft eine Schnittstelle zur effizienten Übertragung von digitalen Signalen, die unterschiedliche Datenraten aufweisen können.

Eine derartige Schnittstelle wird beispielsweise in Funkstationen insbesondere für die Mobilkommunikation eingesetzt. Hierbei werden digitale Basisbandsignale zwischen verschiedenen Baugruppen in der Regel über spezifizierte Schnittstellen übertragen, die überwiegend standardisiert sind. Nachteilig ist hierbei jedoch, dass die meisten Standards bezüglich dieser Schnittstellen für bestimmte Datenraten der zu übertragenden Signale optimiert sind. Damit ist die für eine Übertragung verfügbare Datenrate festgelegt und kann nicht oder nur in einem sehr beschränken Umfang variiert werden.

Aus der DE 103 44 278 A1 ist bekannt, digitale Basisbandsignale von wenigstens zwei unterschiedlichen Mobilfunkstandards wie GSM (Global System for Mobile Communication) und UMTS (Universal Mobile Telecommunication System) über einen einzigen breitbandigen Übertragungskanal in Form einer Datenleitung zu übertragen. Hierbei müssen die Daten unterschiedlicher Standards an die Datenraten der mit dem Übertragungskanal verbundenen Schnittstellen angepasst werden, um über den Übertragungskanal mit einer vorgegebenen Datenrate übertragen werden zu können.

Der Vorteil dieser Lösung besteht vor allem darin, dass bei einer räumlich separaten Anordnung verschiedener Komponenten einer Mobilfunkstation, beispielsweise einer Basisbandverarbeitung im Erdgeschoss oder Keller eines Hauses und einer Sende- und Empfangseinheit auf dem Dach des Hauses, der Verkabelungsaufwand aufgrund der einzigen Datenleitung gering ist.

Nachteilig ist jedoch, dass die Anpassung der Datenraten durch gegebenenfalls große Mengen an ungenutzten Fülldaten ineffizient ist. Andererseits kann durch eine festgeschriebene Aufteilung des gesamten Übertragungskanals in mehrere Teil-Übertragungskanäle die maximal mögliche Datenrate für ein Basisbandsignal auf einen Bruchteil der Gesamtübertragungskapazität begrenzt sein. Deshalb lastet diese Lösung oft nicht die gesamte verfügbare Übertragungskapazität aus und ist nicht für Mobilfunkstandards mit besonders hohen Datenraten geeignet.

Aus der EP 0 485 260 B1 ist ein Verfahren sowie eine Vorrichtung zum Multiplexen und Demultiplexen eines digitalen Signals mit unterschiedlichen Übertragungsraten bekannt, wobei mehrere über Eingangsübertragungskanäle übertragene Eingangsdatenströme in einer Multiplex- und Sende-Zentralstation zusammen geführt, mit einem Schlüssel moduliert und auf einem verzweigten Mehrfachübertragungs-Kommunikationsnetz abgebildet werden. Die genannten Daten werden einer Demultiplex- und Empfangs-Zentralstation zugeführt, in der sie empfangen, extrahiert, demultiplext und mehreren Endgeräten zur Verfügung gestellt werden.

Aus der WO 2005/048624 A1 ist eine verteilte Funkbasisstation bekannt, welche eine Funkausrüstung und eine Steuereinrichtung für die Funkausrüstung aufweist. Die Steuereinrichtung und die Funkausrüstung sind über eine interne Schnittstelle miteinander verbunden. In dieser Schnittstelle werden zwei untere Schichten eines Übertragungsprotokolls bearbeitet, um Daten auf elektrischem oder optischem Weg an mehrere Endgeräte gleichzeitig zu übertragen. Die Endgeräte haben gemeinsam und unabhängig voneinander Zugriff auf einen Übertragungskanal.

Aus der EP 1 052 794 A1 ist ein Multiplexen von Datenströmen bekannt, wobei Dateneingangssignale gemäß unterschiedlichen Übertragungsprotokollen mit zueinander unterschiedlichen Bitraten zu einem Datenausgangssignal kombiniert werden, welches ebenfalls eine andere Bitrate aufweist. Dabei werden die durch besondere Protokolle definierten optischen oder elektrischen Dateneingangssignale von mehreren, beispielsweise zwei gleichartigen Übertragungskanälen in Abhängigkeit vom Füllzustand von Speichereinrichtungen in bestimmten Zeitintervallen zusammen geführt und in einer Abbildungseinrichtung in das Datenausgangssignal umgewandelt. Das Datenausgangssignal wird in einer der Abbildungseinrichtung nachgeschalteten Schnittstelle in ein für die Übertragung geeignetes Format umgewandelt.

Aus der WO 2005/048625 A1 ist eine Verschachtelung verschiedener Übertragungsprotokolle über ein internes Interface innerhalb einer verteilten Basisstation bekannt. Dabei werden durch ein Zeitmultiplexverfahren Daten eines zweiten Protokolls in Rahmen eines ersten Protokolls eingefügt und übertragen. In jeden Rahmen des ersten Protokolls, der keine Daten des zweiten Protokolls enthält, werden Füllbits eingefügt.

Aufgabe der vorliegenden Erfindung ist es daher, eine Schnittstelle zur Übertragung von digitalen Signalen, insbesondere mit unterschiedlichen Datenraten zu schaffen, die durch die Übertragung von Datenströmen, die in Bezug auf die Datenrate und das jeweilige Protokoll unterschiedlich sind, eine optimale Nutzung eines Übertragungskanals gewährleistet.

Diese Aufgabe wird durch eine Schnittstelle zur effizienten Übertragung von digitalen Signalen mit den Merkmalen von Anspruch 1 gelöst. Bevorzugte Ausgestaltungen der Erfindung ergeben sich aus den abhängigen Ansprüchen.

Ein wesentlicher Gedanke der Erfindung besteht darin, dass bei einem Übertragungsprotokoll, das in einem Übertragungsrahmenformat pro Übertragungsrahmen einen Nutzdatenbereich zur Übertragung von digitalen Signalen zur Verfügung stellt, diesen Nutzdatenbereich in Teil-Übertragungskanäle entsprechend den für die Übertragung der digitalen Signale benötigten Datenraten aufzuteilen und den digitalen Signalen zuzuordnen.

Der Nutzdatenbereich entspricht hierbei beispielsweise einem Nutzdatenfeld eines Übertragungsrahmens. Beispielsweise muss gemäß der Erfindung bei einem Übertragungsrahmenformat, das pro Übertragungsrahmen mehrere Teil-Übertra-gungskanäle mit einer vorgegebenen Datenrate zur Verfügung stellt, nicht jeweils ein Teil-Übertragungskanal einem digitalen Signal, z.B. einem Basisbandsignal zugeordnet werden, sondern es können mehrere Teil-Übertragungskanäle auch durch ein breitbandiges Basisbandsignal gemeinsam genutzt werden. Dadurch wird eine flexible Schnittstelle geschaffen, über die vor allem digitale Signale (wie z.B. Basisbandsignale) mit unterschiedlichen Datenraten übertragen werden können.

Insbesondere wird durch die Erfindung die gleichzeitige Übertragung mehrerer breitbandiger Basisbandsignale, die unterschiedliche Datenraten aufweisen können, über einen physikalischen Übertragungskanal, nämlich die Schnittstelle mit einem vorgegebene Übertragungsprotokoll ermöglicht. Damit ist es nicht erforderlich, bei einem Einsatz der erfindungsgemäßen Schnittstelle beispielsweise zwischen Modulen einer Mobilfunkbasisstation das Übertragungsprotokoll oder gar die Schnittstelle selbst an verschiedene Datenraten anzupassen.

Ein wesentlicher Vorteil der Erfindung ist es also, dass mehrere digitale Signale, insbesondere breitbandige Basisbandsignale mit unterschiedlichen Datenraten über den gleichen physikalischen Übertragungskanal übertragen werden können unter Nutzung von mehreren Teil-Übertragungskanälen, wodurch das Übertragungsprotokoll unabhängig von Datenraten der zu übertragenden Signale gehalten werden kann. Dies ist beispielsweise dann von Vorteil, wenn die Standard- bzw. Teil-Übertragungskanäle in kaskadierten Strukturen wie in einer Mobilfunkbasisstation vermittelt werden sollen. In diesem Fall muss lediglich ein TDM (Time Division Multiplexing)-Umschalter für die Teil-Übertragungskanäle zur Verfügung gestellt werden.

Erfindungsgemäß sind die Übertragungskanal-Zuordnungsmittel derart ausgebildet, dass sie bei einem ganzzahligen Verhältnis der vorgegebenen Datenrate eines Teil-Übertragungskanals und der Datenrate des eines digitalen Signals Teil-Übertragungskanäle pro Übertragungsrahmen entsprechend dem ganzzahligen Verhältnis zuordnen.

Wenn beispielsweise die Datenrate eines breitbandigen Basisbandsignal das doppelte oder dreifache der Datenrate eine schmalbandigen Teil-Übertragungskanals ist, können dem breitbandigen Basisbandsignal pro Übertragungsrahmen zwei bzw. drei schmalbandige Teil-Übertragungskanäle zugeordnet werden, um trotz der geringeren Datenrate eines einzelnen schmalbandigen Teil-Übertragungskanals das breitbandige Basisbandsignal mit der höheren Datenrate übertragen zu können. Diese Art der Zuordnung entspricht einer Art von Bündelung von Teil-Übertragungskanälen für ein Basisbandsignal, um eine erforderliche Datenrate zu erzielen.

Erfindungsgemäß sind die Übertragungskanal-Zuordnungsmittel ferner derart ausgebildet, dass sie bei einem nicht ganzzahligen Verhältnis der vorgegebenen Datenrate eines Teil-Übertragungskanals und der Datenrate eines digitalen Signals Teil-Übertragungskanäle in mehreren zeitlich aufeinanderfolgenden Übertragungsrahmen entsprechend dem nicht ganzzahligen Verhältnis zuordnen.

Wenn beispielsweise das Verhältnis der Datenrate eines breitbandigen Basisbandsignals zur Datenrate eines schmalbandigen Teil-Übertragungskanals 4/3 beträgt, können dem Basisbandsignal in drei zeitlich aufeinanderfolgenden Übertragungsrahmen insgesamt vier schmalbandige Teil-Übertragungskanäle zugeordnet werden, z.B. der erste Teil-Übertragungskanal in einem Übertragungsrahmen in allen drei zeitlich aufeinanderfolgenden Übertragungsrahmen und nur im dritten Übertragungsrahmen zusätzlich noch der zweite Teil-Übertragungskanal. Mit anderen Worten wird also für dieses Basisbandsignal der zweite Teil-Übertragungskanal nur in jedem dritten Übertragungsrahmen genutzt, wodurch der zweite Übertragungskanal in jedem anderen Übertragungsrahmen für die Übertragung von anderen Basisbandsignalen genutzt werden kann. Mit einer derartigen Zuordnung kann eine sehr flexible Schnittstelle für unterschiedlichste digitale Signale wie Basisbandsignale verschiedener Mobilfunkstandards geschaffen werden. Allerdings kann eine Pufferung von übertragenen Datenwerten in einem Sender und/oder einem Empfänger erforderlich sein, die über die Schnittstelle miteinander kommunizieren.

Gemäß einer Ausführungsform betrifft die Erfindung eine Schnittstelle zur effizienten Übertragung von digitalen Signalen wie beispielsweise breitbandige Basisbandsignale, wobei die Schnittstelle

- ein vorgegebenes Übertragungsprotokoll, das in einem Übertragungsrahmenformat pro Übertragungsrahmen einen Nutzdatenbereich zur Übertragung der digitalen Signale zur Verfügung stellt, und
- Übertragungskanal-Zuordnungsmittel aufweist, die ausgebildet sind, den Nutzdatenbereich in Teil-Übertragungskanäle entsprechend den für die Übertragung der digitalen Signale benötigten Datenraten aufzuteilen und den digitalen Signalen zuzuordnen.

Unter einer Schnittstelle wird hier insbesondere eine Kommunikationsschnittstelle verstanden, wie sie beispielsweise in Mobilfunkbasisstationen oder Mobiltelefonen eingesetzt ist. Unter einer Funkstation wird hierin jede bewegliche oder stationäre Einheit verstanden, die per Funk kommunizieren kann. Die hier beschriebene Schnittstelle kann beispielsweise auf Modulen und Baugruppen einer Mobilfunkbasisstation eingesetzt werden, um breitbandige Basisbandsignale zwischen den Modulen bzw. Baugruppen zu übertragen.

Die erfindungsgemäße Schnittstelle eignet sich aber prinzipiell für alle Anwendungen, bei denen es um eine möglichst effiziente Ausnutzung von für die Übertragung zur Verfügung stehenden Ressourcen ankommt. Die Übertragung kann leitungsgebunden, aber auch optisch oder per Funk erfolgen. Als Übertragungsprotokoll kann beispielsweise ein Protokoll nach dem CPRI (Common Public Radio Interface) Standard vorgesehen sein.

Die Übertragungskanal-Zuordnungsmittel gemäß der Erfindung umfassen beispielsweise einen Multiplexer, der Abtastwerte insbesondere breitbandiger Basisbandsignale auf die einzelnen insbesondere schmalbandigen Teil-Übertragungskanäle von Übertragungsrahmen multiplext.

Weiterhin können sie Multiplexer-Steuermittel umfassen, welche den Vorgang des Multiplexens steuern, abhängig von verschiedenen Parametern wie die für die Übertragung von Abtastwerten eines breitbandigen Basisbandsignals erforderliche Übertragungsbandbreite.

Gemäß einer weiteren Ausführungsform der Erfindung können die Übertragungskanal-Zuordnungsmittel

- Speichermittel, in denen Zuordnungsvorschriften für die Zuordnung von Teil-Übertragungskanälen zu einem digitalen Signal gespeichert sind, und
- Prozessormittel umfassen, die derart eingerichtet sind, dass sie beim Empfang des digitalen Signals aus den Speichermitteln die Zuordnungsvorschriften auslesen und das digitale Signal entsprechend den ausgelesenen Zuordnungsvorschriften einem oder mehreren Teil-Übertragungskanälen zuordnen.

Die Zuordnungsvorschriften können im Voraus berechnet werden anhand der digitalen Signale, die übertragen werden sollen, und deren Bandbreitenbedarf. Der Vorteil einer Vorausberechnung besteht vor allem darin, dass eine optimierte Zuordnung vorgenommen werden kann in dem Sinne, dass die durch die Teil-Übertragungskanäle für eine Übertragung zur Verfügung gestellte Bandbreite optimal auf die zu übertragenden digitalen Signale verteilt wird. Allerdings sind die Zuordnungsvorschriften durch das Ablegen im Speicher fest vorgegeben und erfordern in der Regel bei einer Änderung eine Umprogrammierung.

Gemäß einer alternativen Ausführungsform der Erfindung können die Übertragungskanal-Zuordnungsmittel auch Prozessormittel aufweisen, die derart eingerichtet sind, dass sie beim Empfang eines digitalen Signals gemäß einem Algorithmus eine Zuordnung des digitalen Signals zu einem oder mehreren Teil-Übertragungskanälen berechnen. Dadurch kann eine sehr flexible Zuordnung erreicht werden, die allerdings einen entsprechenden Rechenaufwand für die Ausführung des Algorithmus benötigt.

Der Algorithmus kann entsprechend den erforderlichen Berechnungsgeschwindigkeiten in Hardware oder Software implementiert sein. Wenn die Taktrate des Übertragungsprotokolls sehr hoch ist, kann eine Implementierung in Hardware sinnvoller sein als eine Software-Lösung mit einem entsprechend leistungsfähigen Prozessor. Die Hardwareimplementierung besitzt allerdings gegenüber der Softwareimplementierung den Nachteil, dass nicht mehr ohne weiteres änderbar ist, während eine Softwareimplementierung in der Regel durch Umprogrammieren wieder geändert und ggf. an die Übertragung von neuen digitalen Signalen angepasst werden kann.

Gemäß einer weiteren Ausführungsform der Erfindung können die Übertragungskanal-Zuordnungsmittel ferner derart ausgebildet sein, den digitalen Signalen weniger als die pro Teil-Übertragungskanal zur Verfügung stehenden Bits zuzuordnen und verschiedene Anzahlen von Bits eines Teil-Übertragungskanals eines bestimmten Übertragungsrahmens zwei oder mehr unterschiedlichen digitalen Signalen zuzuordnen. Dadurch kann eine weitere Flexibilisierung erreicht werden, da nun ein Teil-Übertragungskanal nicht ausschließlich einem bestimmten digitalen Signal zugeordnet werden muss, sondern unter mehreren digitalen Signalen aufgeteilt werden kann.

Eine derartige Aufteilung, die von der pro Teil-Übertragungskanal zur Verfügung stehenden Bitbreite und der pro digitalem Signal benötigten Bitbreite abhängt, ermöglicht eine noch flexiblere Zuordnung von digitalen Signalen zu Teil-Übertragungskanälen. Wenn beispielsweise jeder Teil-Übertragungskanal eines Übertragungsrahmens eine Bitbreite von 32 Bit besitzt, von denen jeweils 16 Bit für einen Real- bzw. Imaginärteil eines Abtastwerts eines digitalen Basisbandsignals genutzt werden, kann bei geringeren Dynamikanforderungen an das Basisbandsignal eine Verringerung der pro Teil-Übertragungskanal benutzten Bitbreite auf zweimal 9 Bit für den Real- und Imaginärteil und einmal 3 Bit für einen Exponenten, also insgesamt 21 Bit erreicht werden. Die übrigen 11 Bit können dann für ein anderes Basisbandsignal verwendet werden.

Gemäß einer Ausführungsform der Erfindung

- kann ein Übertragungsrahmen durch einen Übertragungsblock gebildet sein,
- können die Übertragungsblöcke mit einer Rate R übertragen werden,
- kann jeder Übertragungsblock ein fest definiertes Nutz- und Kontrolldatenfeld und jedes Nutzdatenfeld m Abtastwerte entsprechend m Teil-Übertragungskanälen umfassen, und
- können die Übertragungskanal-Zuordnungsmittel derart ausgebildet sind, dass sie $n_1$ der m Abtastwerte in jedem Übertragungsblock für Abtastwerte eines digitalen Signals mit der Abtastrate $r_1$ kleiner gleich m*R fest reservieren, mit $n_1 = ceil(r_1/R)$, wobei ceil eine Funktion für grundsätzliches Aufrunden darstellt.

Gemäß einer weiteren Ausführungsform der Erfindung können die Übertragungskanal-Zuordnungsmittel ausgebildet sein, die Zuordnung des $j_1$-ten innerhalb der fest reservierten Abtastwerte zum $k_1$-ten Abtastwert des digitalen Signals gemäß der folgenden Formel vorzunehmen:

$$j_1 = floor(n_1 * R * (t_1 - t_0 + k_1 / r_1)),$$

wobei $t_1$ und $t_0$ jeweils ein Zeitversatz und floor die Funktion für ein grundsätzliches Abrunden ist.

An dieser Stelle sei angemerkt, dass grundsätzlich die Zuordnungen gemäß der vorstehenden Formel entweder als Algorithmus in den Übertragungskanal-Zuordnungsmitteln implementiert sein oder auch vorab berechnet werden und in einer Look-Up-Tabelle der Übertragungskanal-Zuordnungsmittel abgelegt sein können. Im letzteren Fall umfasst ein Zuordnungsvorgang ein Nachschlagen in der Look-Up-Tabelle, anstelle einer Berechnung gemäß der vorstehenden Formel. Dadurch kann Rechenleistung eingespart werden.

Gemäß einer weiteren Ausführungsform der Erfindung können die Übertragungskanal-Zuordnungsmittel ferner ausgebildet sein,

- jeweils B zeitlich aufeinander folgende Übertragungsblöcke zu einer Übertragungseinheit zusammenzufassen, die mit einer Rate $R_B$ = R/B übertragen wird und $m_B$ = m*B Abtastwerte umfasst, und
- $n_{B1}$ der $m_B$ Abtastwerte in der Übertragungseinheit für Abtastwerte eines digitalen Signals mit der Abtastrate fest zu reservieren, mit $n_{B1}$ = ceil($r_1$*B/R).

Dadurch kann die Effizienz der Erfindung weiter verbessert werden. Vor allem bei digitalen Basisbandsignalen mit sehr kleiner Datenrate $r_i$ oder einer Datenrate knapp über einem ganzzahligen Vielfachen von R kann dieses Verfahren zu einer wesentlich besseren Ausnutzung der zur Verfügung stehenden Übertragungskapazität führen.

Gemäß einer weiteren Ausführungsform der Erfindung können die Übertragungskanal-Zuordnungsmittel insbesondere ausgebildet sein, die Zuordnung des $j_1$-ten innerhalb der fest reservierten Abtastwerte zum $k_1$-ten Abtastwert des digitalen Signals gemäß der folgenden Formel vorzunehmen:

$$j_1 = floor(n_{B1} * R * (t_1 - t_0 + k_1 / r_1) / B),$$

wobei $t_1$ und $t_0$ jeweils ein Zeitversatz und floor die Funktion für ein grundsätzliches Abrunden ist.

Gemäß einer weiteren Ausführungsform der Erfindung können die Übertragungskanal-Zuordnungsmittel ferner ausgebildet sein, innerhalb eines Protokolldatenstroms jedem zu übertragenden digitalen Signal i = 1, 2, ..., L jeweils eine eigene Übertragungseinheit zuzuordnen, die $B_i$ zeitlich aufeinander folgende Übertragungsblöcke umfasst, wobei $B_i$ an das zu übertragende digitale Signal i angepasst ist. Durch die Verwendung unterschiedlicher Werte für die $B_i$ innerhalb eines Protokolldatenstroms kann jedem digitalen Signal x ein optimal angepasster Wert $B_x$ gewidmet werden, wodurch die Effizienz der Datenübertragung weiter verbessert werden kann.

Gemäß einer weiteren Ausführungsform der Erfindung können die Übertragungskanal-Zuordnungsmittel auch ausgebildet sein, L digitale Signale mit jeweils einer Abtastrate $r_i = N_i * r$, i = 1, 2, ..., L, die ein ganzzahliges Vielfaches $N_i$ von einer Grundabtastrate r ist, zu einem gemeinsamen digitalen Signal mit F-facher Abtastrate $r_{ges}$ = F*r mit:

$$F = \sum_{i=1}^{L} N_i$$

zusammenzufassen. Der Vorteil dieser Ausführungsform besteht nun darin, dass zur Übertragung des gemeinsamen digitalen Signals insgesamt $n_1$ = ceil(F*r/R) Abtastwerte zu reservieren sind, während bei einer getrennten Übertragung der L einzelnen digitalen Signale

$$n_2 = \sum_{i=1}^{L} ceil(N_i \cdot r / R)$$

Abtastwerte reserviert werden müssten.

Gemäß einer weiteren Ausführungsform der Erfindung

- kann ein Übertragungsrahmen durch einen Übertragungsblock gebildet sein,
- können die Übertragungsblöcke mit einer Rate R übertragen werden,
- kann jeder Übertragungsblock ein fest definiertes Nutz- und Kontrolldatenfeld und
- jedes Nutzdatenfeld m Abtastwerte entsprechend m Teil-Übertragungskanälen umfassen, und
- können die Übertragungskanal-Zuordnungsmittel derart ausgebildet sein, dass sie n der m Abtastwerte in jedem Übertragungsblock für Abtastwerte einer Gruppe von L digitalen Signalen mit jeweiligen Abtastraten $r_i$, i = 1, 2, ..., L mit:

$$R_L = \sum_{i=1}^{L} r_i \le m \cdot R$$

fest reservieren, wobei sich die n reservierten Abtastwerte nach n = ceil($R_L$/R) bestimmen, mit ceil stellt die Funktion für grundsätzliches Aufrunden dar.

Gemäß einer weiteren Ausführungsform der Erfindung können die Übertragungskanal-Zuordnungsmittel ausgebildet sein, die Zuordnung des $J_q$-ten innerhalb der fest reservierten Abtastwerte zum $k_q$-ten Abtastwert des q-ten digitalen Signals aus der Gruppe von digitalen Signalen gemäß der folgenden Formel vorzunehmen:

$$J_q = \mathrm{floor}((n*R - \sum_{i=1}^{q-1} r_i)*(t_q - t_0 + k_q/r_q)),$$

wobei $t_q$ und $t_0$ jeweils ein Zeitversatz und floor die Funktion für ein grundsätzliches Abrunden ist.

Gemäß einer weiteren Ausführungsform der Erfindung kann

- ein Übertragungsrahmen durch einen Übertragungsblock gebildet sein,
- können die Übertragungsblöcke mit einer Rate R übertragen werden,
- kann jeder Übertragungsblock ein fest definiertes Nutz- und Kontrolldatenfeld und
- jedes Nutzdatenfeld m Abtastwerte entsprechend m Teil-Übertragungskanälen umfassen, und
- können die Übertragungskanal-Zuordnungsmittel derart ausgebildet sein, dass sie jedem zu übertragenden digitalen Signal einen separaten Teil-Übertragungskanal an einer festen Stelle in jedem Übertragungsrahmen zuordnen und die Bitbreite jedes Teil-Übertragungskanals $S_i$ an die Abtastrate $r_i$ und Abtastwert-Bitgröße $s_i$ des dazugehörigen digitalen Signals wie folgt anpassen:

$$S_i = \mathrm{ceil}\left(s_i \cdot \frac{r_i}{R}\right)$$

R ist hierbei die Übertragungsrahmen-Rate.

Die Erfindung betrifft gemäß einer weiteren Ausführungsform eine Funkstation mit mindestens einer Schnittstelle nach der Erfindung und wie oben erläutert, wobei die Funkstation Module umfasst, die kommunikationsmäßig durch die mindestens eine Schnittstelle verbunden sind.

Gemäß einer Ausführungsform der Erfindung kann die Funkstation eine Mobilfunkbasisstation sein, in der über die mindestens eine Schnittstelle breitbandige Basisbandsignale verschiedener Mobilfunkstandards zwischen den kommunikationsmäßig verbundenen Modulen übertragen werden.

Schließlich betrifft die Erfindung gemäß einer Ausführungsform die Verwendung einer Schnittstelle nach der Erfindung in einer Mobilfunkbasisstation zur kommunikationsmäßigen Verbindung von Modulen der Mobilfunkbasisstation und zur Übertragung von breitbandigen Basisbandsignalen verschiedener Mobilfunkstandards zwischen den kommunikationsmäßig verbundenen Modulen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

FIG 1 ein Ausführungsbeispiel einer Schnittstelle gemäß der Erfindung;

FIG 2 ein CPRI basiertes Rahmen-Timing gemäß der Erfindung;

FIG 3 die Abbildung von 16 generischen Antennenträgern gAxC in den Basisrahmen (2457,6 Mbit/s);

FIG 4 ein Beispiel für einen 614,4 Mbit/s-Basisrahmen (R = 3,84 MHz), bei dem $n_1$ = 2 generische Antennenträger gAxC#1 und gAxC#2 (p = 1) für einen bAxC ($r_1$ = 5 MHz) benutzt werden;

FIG 5 ein Beispiel für eine Datenrate $r_1$ = 5 MHz ($n_1$ = 2, $t_1$-$t_0$ = 0), bei der gemäß der Erfindung eine Zuordnungsvorschrift mit j = $j_1$; k = $k_1$ angewandt wurde;

FIG 6 eine beispielhafte Darstellung des Übertragungsschemas von 3 Signalen bei einer Zusammenfassung von B=4 aufeinander folgenden Blöcken zu einer gemeinsamen Übertragungseinheit gemäß der Erfindung;

FIG 7 ein Beispiel zur effizienten Übertragung von mehreren Signalen mit identischer Datenrate gemäß der Erfindung;

FIG 8A bis FIG 8C das Prinzip der effizienten Übertragung dreier Signale mit unterschiedlicher Datenrate nach einem weiteren Verfahren gemäß der Erfindung; und

FIG 9A bis FIG 9D das Prinzip der effizienten Übertragung eines Signals mit unterschiedlicher Datenrate anhand von vier verschiedenen Möglichkeiten nach einem vierten Verfahren gemäß der Erfindung.

In der folgenden Beschreibung können gleiche und/oder funktional gleiche Elemente mit denselben Bezugszeichen bezeichnet sein. Im Folgenden wird die Erfindung anhand der Übertragung von breitbandigen Basisbandsignalen als digitalen Signalen erläutert. Grundsätzlich ist die Erfindung jedoch für alle möglichen digitalen Signale geeignet, die über Teil-Übertragungskanäle übertragen werden. Mit anderen Worten ist es also keine Voraussetzung der Erfindung, dass die zu übertragenden Signale breitbandige Basisbandsignale sind, die breitbandiger als die Bandbreite von Teil-Übertragungskanälen sind.

In FIG 1 ist eine Schnittstelle 10 gemäß der Erfindung gezeigt, die in einer Mobilfunkbasisstation eingesetzt wird und breitbandige Basisbandsignale 12 und 14 empfängt und diese über Teil-Übertragungskanäle 16 überträgt, genauer gesagt zur Übertragung über die Teil-Übertragungskanäle 16 vorbereitet und aufteilt.

Die Schnittstelle 10 umfasst hierzu Übertragungskanal-Zuordnungsmittel 22, die wiederum Speichermittel 24 für Zuordnungsvorschriften und Prozessormittel 26 zum Zuordnen der breitbandigen Basisbandsignale 12 und 14 zu den Teil-Übertragungskanälen 16 umfassen.

Den Übertragungskanal-Zuordnungsmitteln 22 ist ein TDM (Time Division Multiplexing)-Switch 28 nachgeschaltet, der die auf die Teil-Übertragungskanäle aufgeteilten breitbandigen Basisbandsignale in ein vorgegebenes Übertragungsprotokoll 18 multiplext. Das Übertragungsprotokoll 18, beispielsweise gemäß CPRI Spezifikation V2.0, weist ein Übertragungsrahmenformat mit mehreren Übertragungsrahmen 20 auf, die zeitlich aufeinander folgend über einen Übertragungskanal, beispielsweise eine Datenleitung übertragen werden. Jeder der Übertragungsrahmen 20 umfasst die Teil-Übertragungskanäle 16, genauer gesagt werden pro Übertragungsrahmen für jeden Teil-Übertragungskanal 16 jeweils ein Abtastwert eines Signals oder einzelne Bits eines Signals zeitlich aufeinander folgend übertragen.

Hierbei weist ein Abtastwert üblicherweise einen Realteil I und einen Imaginärteil Q eines komplexen Signalabtastwertes mit jeweils einer bestimmten Bitbreite auf. Am Anfang jedes Übertragungsrahmens ist ein Steuerdatenfeld vorgesehen. Details zum Übertragungsprotokoll 18 werden in Zusammenhang mit den FIG 2 bis FIG 5 weiter unten noch beschrieben.

Im Folgenden wird nun anhand von typischen Anwendungsfällen beschrieben, wie die Schnittstelle gemäß der Erfindung breitbandige Mobilfunksignale mit unterschiedlichen Datenraten durch die gemeinsame Nutzung von mehreren schmalbandigen Standard- bzw. Teil-Übertragungskanälen, die z.B. generischen Antennenträgern gAxC (generic Antenna Carrier) entsprechen, innerhalb eines gemeinsamen physikalischen Übertragungskanals überträgt, beispielsweise zwischen einem Basisbandmodul und einem Funkschnittstellenmodul einer Mobilfunkbasisstation. Unter einem Standardübertragungskanal wird hierbei insbesondere ein gAxC verstanden, der gemäß einem bestimmten Schnittstellen-Standard vorgegeben ist, beispielsweise gemäß der CPRI Spezifikation V2.0.

Der physikalische Übertragungskanal kann beispielsweise in Form einer Übertragungsleitung zwischen Modulen der Mobilfunkbasisstation vorgesehen sein. Die Kommunikation zwischen den einzelnen Modulen erfolgt hierbei über die erfindungsgemäße Schnittstelle, die mit dem physikalischen Übertragungskanal kommunikationsmäßig verbunden ist. Ein typischer Anwendungsfall ist beispielsweise die Kommunikation in einer Mobilfunkbasisstation zwischen einem Basisbandsignalmodul und einem Funkmodul, das zum Senden und Empfangen von Mobilfunksignalen über eine Funkschnittstelle der Basisstation vorgesehen ist. Das Basisbandmodul kann wie das Funkmodul hierbei für die Verarbeitung von Mobilfunksignalen verschiedener Standards wie beispielsweise von GSM (Global System for Mobile Communication), UMTS (Universal Mobile Telecommunication System), WiMAX (Worldwide Interoperability for Microwave Access) oder auch 3G+LTE (third Generation Plus Long Term Evolution) ausgelegt sein.

Selbstverständlich ist die Erfindung nicht auf diese Standards beschränkt, sondern kann zur Übertragung aller breitbandigen Signale über einen physikalischen Übertragungskanal eingesetzt werden, der nur schmalbandige Übertragungskapazitäten in Form mehrerer schmalbandiger Standard- bzw. Teil-Übertragungskanäle gAxC aufweist.

Zum besseren Verständnis der Erläuterung der Erfindung werden zunächst verschiedene einfachere Anwendungsfälle beschrieben, bevor ein Ausführungsbeispiel mit einem modifizierten CPRI-Standard erläutert wird.

In einem ersten Anwendungsfall weisen die zu übertragenden Mobilfunksignale Datenraten auf, die in einem ganzzahligen Verhältnis zu der Datenrate von Standardübertragungskanälen des physikalischen Übertragungskanals stehen. In diesem Fall kann die Übertragung durch eine Bündelung mehrerer schmalbandiger Standard- bzw. Teil-Übertragungskanäle erfolgen. Der physikalische Übertragungskanal kann beispielsweise in Übertragungsrahmen aufgeteilt sein mit einer Übertragungsrahmenrate von 3,84 MHz. Jeder Rahmen kann Kontrollinformationen C und vier Standardübertragungskanäle 1 bis 4 aufweisen. Pro Standardübertragungskanal kann ein komplexwertiger Abtastwert eines Mobilfunksignals übertragen werden. Die Datenraten der einzelnen Standardübertragungskanäle betragen entsprechend der Übertragungsrahmenrate 3,84 MHz. Damit ist die Datenrate in den vier Standardübertragungskanälen festgelegt, so dass bei normaler Nutzung insgesamt vier Mobilfunksignale mit jeweils einer Datenrate von 3,84 MHz übertragen werden können. Eine derartige normale Nutzung mit vier verschiedenen Übertragungskanälen kann beispielsweise wie folgt aussehen (vier Rahmen dargestellt):

| | | | | | | | | | | | | | | | | | | | |
|---|---|---|---|---|---|---|---|---|---|---|---|---|---|---|---|---|---|---|---|
| C | 1 | 2 | 3 | 4 | C | 1 | 2 | 3 | 4 | C | 1 | 2 | 3 | 4 | C | 1 | 2 | 3 | 4 |

In jedem der vier schmalbandigen Kanäle pro Rahmen wird jeweils ein Abtastwert eines Mobilfunksignals 1 bis 4 mit einer Datenrate von 3,84 MHz übertragen. Um nun beispielsweise ein breitbandiges Mobilfunkbasisbandsignal 1 mit einer Datenrate von 7,68 MHz, die ein ganzzahliges Vielfaches der Rate 3,84 MHz ist, über den physikalischen Übertragungskanal gemäß dem vorgegebenen Übertragungsprotokoll mit vier Standardübertragungskanälen übertragen zu können, können zwei schmalbandige Standard- bzw. Teil-Übertragungskanäle, beispielsweise die Kanäle 1 und 2 gebündelt werden, um einen breitbandigen Kanal zu schaffen (2*3,84 MHz = 7,68 MHz), wie im Folgenden gezeigt ist:

| | | | | | | | | | | | | | | | | | | | |
|---|---|---|---|---|---|---|---|---|---|---|---|---|---|---|---|---|---|---|---|
| C | 1 | 1 | | | C | 1 | 1 | | | C | 1 | 1 | | | C | 1 | 1 | | |

Die Bündelung ist im obigen Beispiel ohne weiteres möglich, da die Datenrate des zu übertragenden breitbandigen Mobilfunkbasisbandsignals 1 ein ganzzahliges Vielfaches der Datenrate eines Standardübertragungskanals ist. Das Übertragungsschema bzw. die Zuordnungsvorschriften, d.h. die Bündelung von Standardübertragungskanälen und die Zuordnung zwischen Standardübertragungskanälen und zu übertragenden Signalen sollte allen an der Übertragung beteiligten Komponenten bekannt sein, insbesondere dem Sender und dem Empfänger. Die Zuordnungsvorschriften können wie oben zu Fig. 1 beschrieben in einem Speicher der Schnittstelle abgelegt sein.

Weisen die über den physikalischen Übertragungskanal zu übertragenden Mobilfunksignale Datenraten auf, die kein ganzzahliges Vielfaches der Datenrate eines schmalbandigen Teil-Übertragungskanals sind, kann die Übertragung dadurch erfolgen, dass einzelne schmalbandige Standard- bzw. Teil-Übertragungskanäle nicht in jedem Abtastschritt genutzt werden (Anwendungsfall 2). In diesem Fall sollte allerdings das Schema, wann ein Standardübertragungskanal genutzt wird und wann nicht, sowohl einem an der Übertragung beteiligten Sender als auch Empfänger gleichermaßen bekannt sein, insbesondere den an der Übertragung beteiligten Modulen.

Zur Synchronisation zwischen Sender und Empfänger kann ein einheitliches, gemeinsames Rahmenprotokoll wie beispielsweise gemäß der CPRI (Common Public Radio Interface) Spezifikation V2.0 genutzt werden. Dieses Schema kann beispielsweise in Tabellenform oder über einen Algorithmus dem Sender und Empfänger bekannt gemacht werden und in der Schnittstelle implementiert sein. Ausgehend von dem oben bereits beschriebenen Beispiel eines physikalischen Übertragungskanals mit einer Übertragungsrahmenrate von 3,84 MHz und vier Standardübertragungskanälen pro Rahmen kann beispielsweise ein breitbandiges Mobilfunkbasisbandsignal 1 mit einer Datenrate von 5,12 MHz durch Nutzung von zwei Kanälen im dritten Rahmen übertragen werden:

| | | | | | | | | | | | | | | | | | | | |
|---|---|---|---|---|---|---|---|---|---|---|---|---|---|---|---|---|---|---|---|
| C | 1 | | | | C | 1 | | | | C | 1 | 1 | | | C | 1 | | | |

Dadurch werden in drei Rahmen insgesamt vier Abtastwerte des Mobilfunkbasisbandsignals übertragen, wodurch Signale mit einer Datenrate von 4/3*3,84 MHz = 5,12 MHz übertragen werden können. Auf diese Weise können auch andere Verhältnisse erzielt werden, wobei aber die zu übertragenden Abtastwerte bzw. Daten im Sender und Empfänger gepuffert werden sollten.

Eine sehr effiziente Ausnutzung des gemeinsamen physikalischen Übertragungskanals kann erreicht werden, in dem beispielsweise ein schmalbandiger Standard- bzw. Teil-Übertragungskanal teilweise für zwei breitbandige Mobilfunkbasisbandsignale genutzt wird (Anwendungsfall 3). Auch in diesem Fall sollte ähnlich wie im Anwendungsfall 2 sowohl dem an der Übertragung beteiligten Sender als auch Empfänger ein Schema der Nutzung der Standardübertragungskanäle bekannt gemacht werden. In diesem Fall wird zur noch effizienteren Nutzung der zur Verfügung stehenden Übertragungskapazität eine Änderung des ansonsten benutzten Zahlenformats genutzt, beispielsweise indem pro Abtastwert bzw. Sample statt zwei 16-Bit-Zahlen für den Realteil "I" und den Imaginärteil "Q", also insgesamt 32 Bit, nur zweimal 9 Bit (reduzierter Realteil I' und reduzierter Imaginärteil Q') und ein 3-Bit-Exponent "E" (Übertragung in Binärdarstellung) verwendet werden. Dadurch werden pro Abtastwert insgesamt nur 21 Bit benötigt, wodurch pro Standardübertragungskanal zusätzliche Kapazitäten in Form von 11 Bits für die Übertragung frei werden. Der nicht reduzierte Real- und Imaginärteil des Abtastwerts wird dann aus dem Bit-reduzierten Real- und Imaginärteil wie folgt berechnet:

$$I = I'*2^E, Q = Q'*2^E.$$

Bei dem im Folgenden beschriebenen normalen Anwendungsfall beträgt die Übertragungsrahmenrate wieder 3,84 MHz und jeder Übertragungsrahmen enthält Kontrollinformationen (C) und vier Standardübertragungskanäle. Pro Kanal kann ein komplexwertiger Abtastwert eines Mobilfunksignals 1 bis 4 übertragen werden. Jede Zeile entspricht einem Bit, so dass bei den acht dargestellten Zeilen ein Abtastwert pro Standardübertragungskanal 8 Bit aufweist:

| | | | | | | | | | | | | | | | | | | | |
|---|---|---|---|---|---|---|---|---|---|---|---|---|---|---|---|---|---|---|---|
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |
| C | 1 | 2 | 3 | 4 | C | 1 | 2 | 3 | 4 | C | 1 | 2 | 3 | 4 | C | 1 | 2 | 3 | 4 |

Werden beispielsweise aufgrund geringerer Dynamikanforderungen nur 6 Bits pro Abtastwert benötigt, können erfindungsgemäß die übrigen Bits eines Standardübertragungskanals für einen neuen Kanal genutzt werden. Das folgende Beispiel zeigt, wie in den vier Standardübertragungskanälen insgesamt fünf Abtastwerte von fünf unterschiedlichen Mobilfunksignalen 1 bis 5 übertragen werden können:

| | | | | | | | | | | | | | | | | | | | |
|---|---|---|---|---|---|---|---|---|---|---|---|---|---|---|---|---|---|---|---|
| C | 1 | 2 | 3 | 5 | C | 1 | 2 | 3 | 5 | C | 1 | 2 | 3 | 5 | C | 1 | 2 | 3 | 5 |
| C | 1 | 2 | 3 | 5 | C | 1 | 2 | 3 | 5 | C | 1 | 2 | 3 | 5 | C | 1 | 2 | 3 | 5 |
| C | 1 | 2 | 4 | 5 | C | 1 | 2 | 4 | 5 | C | 1 | 2 | 4 | 5 | C | 1 | 2 | 4 | 5 |
| C | 1 | 2 | 4 | 5 | C | 1 | 2 | 4 | 5 | C | 1 | 2 | 4 | 5 | C | 1 | 2 | 4 | 5 |
| C | 1 | 3 | 4 | 5 | C | 1 | 3 | 4 | 5 | C | 1 | 3 | 4 | 5 | C | 1 | 3 | 4 | 5 |
| C | 1 | 3 | 4 | 5 | C | 1 | 3 | 4 | 5 | C | 1 | 3 | 4 | 5 | C | 1 | 3 | 4 | 5 |
| C | 2 | 3 | 4 | | C | 2 | 3 | 4 | | C | 2 | 3 | 4 | | C | 2 | 3 | 4 | |
| C | 2 | 3 | 4 | | C | 2 | 3 | 4 | | C | 2 | 3 | 4 | | C | 2 | 3 | 4 | |

Die Datenraten der fünf übertragenen Mobilfunksignale betragen hierbei 3,84 MHz mit 6 Bits pro Abtastwert. Wie sich aus der obigen Tabelle ergibt, bleiben zwei Bits im vierten Standardübertragungskanal pro Übertragungsrahmen ungenutzt. Durch Zulassen eines Überlaufs von einem Übertragungsrahmen in den darauf folgenden Übertragungsrahmen können auch noch diese ungenutzten Bits genutzt werden. Die folgende Tabelle zeigt eine Übertragung von insgesamt 16 Mobilfunksignalen 1 bis 16 in drei Übertragungsrahmen mit jeweils vier Standardübertragungskanälen:

| | | | | | | | | | | | | | | | | | | | |
|---|---|---|---|---|---|---|---|---|---|---|---|---|---|---|---|---|---|---|---|
| C | 1 | 2 | 3 | 5 | C | 6 | 7 | 9 | 10 | C | 11 | 13 | 14 | 15 | C | 1 | 2 | 3 | 5 |
| C | 1 | 2 | 3 | 5 | C | 6 | 7 | 9 | 10 | C | 11 | 13 | 14 | 15 | C | 1 | 2 | 3 | 5 |
| C | 1 | 2 | 4 | 5 | C | 6 | 8 | 9 | 10 | C | 12 | 13 | 14 | 16 | C | 1 | 2 | 4 | 5 |
| C | 1 | 2 | 4 | 5 | C | 6 | 8 | 9 | 10 | C | 12 | 13 | 14 | 16 | C | 1 | 2 | 4 | 5 |
| C | 1 | 3 | 4 | 5 | C | 7 | 8 | 9 | 11 | C | 12 | 13 | 15 | 16 | C | 1 | 3 | 4 | 5 |
| C | 1 | 3 | 4 | 5 | C | 7 | 8 | 9 | 11 | C | 12 | 13 | 15 | 16 | C | 1 | 3 | 4 | 5 |
| C | 2 | 3 | 4 | 6 | C | 7 | 8 | 10 | 11 | C | 12 | 14 | 15 | 16 | C | 2 | 3 | 4 | 6 |
| C | 2 | 3 | 4 | 6 | C | 7 | 8 | 10 | 11 | C | 12 | 14 | 15 | 16 | C | 2 | 3 | 4 | 6 |

In drei Übertragungsrahmen wird hierbei jeweils ein Abtastwert jedes der 16 Mobilfunksignale übertragen. Daraus ergibt sich eine Datenrate von 1/3*3,84 MHz = 1,28 MHz pro Mobilfunksignal 1 bis 16. In diesem Fall werden also viele schmalbandige Mobilfunksignale über breitbandigere Standardübertragungskanäle übertragen. Alternativ können beispielsweise anstelle der 16 nur 4 verschiedene Mobilfunksignale mit einer jeweiligen Datenrate von 4/3*3,84 MHz = 5,12 MHz übertragen werden. Weitere Alternativen sind selbstverständlich ebenfalls denkbar.

Der Vorteil der oben erläuterten Anwendungsfälle besteht vor allem darin, dass bereits existierende und für eine bestimmte Datenrate ausgelegte Schnittstellen und Übertragungsprotokolle weiter genutzt werden können. Weiterhin ermöglicht es die Erfindung auch, mehr Mobilfunksignale als die entsprechenden zur Verfügung stehenden Standardübertragungskanäle zu übertragen. Schließlich ist es mit der Erfindung auch möglich, Mobilfunksignale mit unterschiedlichen Abtast- bzw. Datenraten über einen physikalischen Übertragungskanal und vorgegebene Schnittstellen zu übertragen, wie das folgende Beispiel zeigt, bei dem über einen physikalischen Übertragungskanal mit vier Standardübertragungskanälen mit jeweils einer Datenrate von 3,84 MHz zwei Mobilfunksignale 1 und 2 mit Datenraten von 5,12 MHz (Signal 2) bzw. 7,68 MHz (Signal 1) übertragen werden:

| | | | | | | | | | | | | | | | | | | | |
|---|---|---|---|---|---|---|---|---|---|---|---|---|---|---|---|---|---|---|---|
| C | 1 | | 2 | 2 | C | 1 | | 2 | 2 | C | 1 | 1 | 2 | 2 | C | 1 | | 2 | 2 |

Wie sich aus der obigen Tabelle ergibt, werden vier Abtastwerte des Mobilfunksignals 1 in drei Übertragungsrahmen und acht Abtastwerte des Mobilfunksignals 2 in vier Übertragungsrahmen übertragen, wodurch sich Datenraten von 4/3*3,84 MHz = 5,12 MHz bzw. 8/4*3,84 MHz = 7,68 MHz ergeben.

Im Folgenden wird nun ein Ausführungsbeispiel der Erfindung erläutert, basierend auf den Standards CPRI und OFDM (Orthogonal Frequency Division Multiplexing), wie sie bei WiMAX und 3G+LTE zum Einsatz kommen sollen. Genauer gesagt wird eine Zuordnungsvorschrift gemäß der Erfindung für einen modifizierten CPRI-Übertragungsstandard erläutert.

Hierbei sieht ein Mastertakt einer Basisstation denselben gemeinsamen Takt und dieselben gemeinsamen Taktsignale für alle Funkstandards vor. Die Taktfrequenz soll ein Vielfaches von 3,84 MHz sein, und das Rahmen-Timing soll auf 10 ms UMTS-Rahmen, unterteilt in 150 Hyperrahmen basieren. Die NodeB-Rahmennummer (BFN: B frame number) zählt von 0 bis 4095 Rahmen, was eine Periodizität von 40,96 s der Rahmen-Timing-Information vorsieht. Dieses CPRI basierte Rahmen-Timing ist in Fig. 2 dargestellt.

Der gemeinsame Takt und die gemeinsame Timing-Information kann via CPRI übertragen werden. Das Rahmen-Timing für andere Standards sollte vom gemeinsamen Takt und den Timingsignalen abgeleitet werden. Falls das Rahmentiming für andere Funkstandards nicht in die 40,96 s Periodizität passt, sollte Echtzeitinformation, beispielsweise die GPS (Global Positioning System)-Zeit und -Woche in jeder Sekunde, zum Mastertakt über logische Nachrichten, beispielsweise ein Transfer über GbE oder den CPRI C&M Kanal, erhältlich sein. Diese Nachrichten könnten z.B. die aktuelle BFN und $t_1$ enthalten. Basierend auf diesen Nachrichten kann ein willkürliches Rahmen-Timing erzeugt werden.

CPRI-Formate für "OFDM Standards" (WiMAX, 3G+LTE) werden auf UMTS-Antennenträgern AxC (Antenna Carrier) mit einer Modifikation in der UL (Uplink)-Verbindung basieren. Ein Format von generischen Antennenträgern (gAxC) kann hierbei wie folgt lauten:

DL (Downlink)-Verbindung: IQ-Abtastwertbreite: 2*15 Bit, Datenrate 3,84 MHz
UL (Uplink) -Verbindung: IQ-Abtastwertbreite: 2*15 Bit, Datenrate 3,84 MHz

Bezüglich des obigen Formats ist die Anzahl von generischen Antennenträgern gAxC 16 pro CPRI-Basisrahmen 20 fest vorgegeben:

614,4 Mbit/s: 4 gAxC: #0, #1, ...., #3
1,2288 Gbit/s: 8 gAxC: #0, #1, ..., #7
2,4576 Gbit/s: 16 gAxC: #0, #1, ..., #15

Jeder generische Antennenträger gAxC 16 entspricht hier einem schmalbandigen Teil-Übertragungskanal.

Die Übertragung eines Breitband-Antennenträgers (bAxC) für "OFDM-Standards" mit 15 Bit Wortbreite und einer Datenrate $f_s$ erfordert eine bestimmte Anzahl "n" von generischen Antennenträgern gAxC mit $1 \leq n \leq 16$. Die Anzahl "n" kann als die kleinste ganze Zahl berechnet werden, die der Bedingung $n*3{,}84\ MHz \geq f_s$ genügt. Da $n \leq 16$ gilt, ist die maximale Datenrate $f_{s,max}$ = 16*3,84 MHz = 61,44 MHz. Dies reicht für typische Mobilfunkstandards aus, die in einer multistandardfähigen Basisstation vertreten sein können.

Es sei nun angenommen, dass alle generischen Antennenträger gAxC (p + g), die zum selben bAxC gehören, aufeinander in einem Basisrahmen 20 folgen, d.h. es werden gAxC p, p+1, ..., p+n-1 benutzt. Hier wird g der gAxC-Index genannt und geht von 0 bis n-1. Der CPRI-Umschalter muss nur gAxC umschalten (ein UMTS-AxC-Umschalter ist in der DL-Verbindung derselbe und in der UL-Verbindung enthalten). Ein bAxC wird auf n gAxC in den BB (Broadband)-Karten und Funkmodulen abgebildet. Daher kann der CPRI-Umschalter auch vielfältige Standards auf einer physikalischen CPRI-Verbindung behandeln.

FIG 3 zeigt die Abbildung von insgesamt sechzehn gAxC 16 in den Basisrahmen 20 (2457,6 Mbit/s).

FIG 4 zeigt ein Beispiel, bei dem generische Antennenträger gAxC#1 und gAxC#2 (p = 1, n = 2) für einen bAxC (614,4 Mbit/s) benutzt werden.

Während einer 40,96 s Periode (4096 UMTS-Rahmen) übertragen n gAxC n*4096*38400 Abtastwerte (jeder Abtastwert umfasst 2 * 15 Bit). Jedem dieser Abtastwerte wird eine eindeutige Nummer j zugewiesen. Die Nummer m kann basierend auf der empfangenen CPRI-Rahmenstruktur (BFN, z, x) wie folgt berechnet werden:

g: gAxC Index
x: Basis-Rahmennummer (innerhalb eines Hyperrahmens)
z: Hyperrahmen-Nummer (innerhalb eines UMTS-Rahmens)
BFN: UMTS-Rahmennummer

$$j = g + n*x + n*256*z + n*38400*BFN$$

Der bAxC mit einer Datenrate $f_s$ erfordert Abtastwerte mit einem Index k zu den Zeitpunkten $t_k = t_0 + k/f_s$. Die Schnittstelle sieht Abtastwerte mit einem Index j zu den Zeitpunkten $t_j = t_1 + j/(n*3{,}84\ MHz)$ vor.

FIG 5 zeigt ein Beispiel für eine Datenrate $f_s$ = 5 MHz (n = 2, $t_1$-$t_0$ = 0), bei der die unten beschriebene Gleichung SRC (Sample Rate Conversion) angewandt wurde.

Das Prinzip der Gleichung SRC wird im Folgenden kurz erläutert: der letzte verfügbare Abtastwert, der von einer Schnittstelle vorgesehen wird, sollte mit $t_j \leq t_k$ benutzt werden. Dies ist äquivalent zu

$$t_1 + j/(n*3{,}84\ \mathrm{MHz}) \leq t_0 + k/f_s$$

und ergibt als Ergebnis:

$$j = \mathrm{floor}(n*3{,}84\ \mathrm{MHz}*(t_0 - t_1 + k/f_s))$$

Gleichung SRC

Die Funktion floor bedeutet hierbei ein grundsätzliches Abrunden. Da n durch n*3,84 MHz $\geq f_s$ definiert ist, erhöhte sich j schneller als k, d.h. jeder Abtastwert auf der Schnittstelle wird niemals zweimal benutzt. Das bedeutet, dass die Schnittstellenkapazität ausreichend ist.

Einige Abtastwerte j werden nicht benutzt und sollten wie reservierte "r" Bits in CPRI behandelt werden (Sender: r = 0, Empfänger: r = don't care). Für einen korrekten Betrieb muss das Funkmodul das Timing-Offset ($t_0$ - $t_1$) kennen. Die Übermittlung dieser Information kann über einen CPRI C&M Kanal zum entsprechenden Funkmodul erfolgen. Die Zeit $t_1$ erhöht sich um 40,96 s jede 40,96 s. Daher sollte ($t_0$ - $t_1$) wenigstens jede 40,96 s ausgesandt werden. Jedoch kann es für ein schnelles Start-Up und ein relativ schnelles Redundanzschalten notwendig sein, es öfter auszusenden, beispielsweise jede Sekunde.

Wie oben beschrieben wurde, können also erfindungsgemäß gleichzeitig mehrere Mobilfunk-Basisbandsignale, die unterschiedliche Datenraten aufweisen können, über eine Schnittstelle, d.h. einen physikalischen Übertragungskanal mit einem vorgegebenen Übertragungsprotokoll übertragen werden können. Anhand der oben erläuterten Ausführungsbeispiele der Erfindung wurde auch gezeigt, dass in der Regel zu übertragende Datenströme der einzelnen Mobilfunksignale verschachtelt werden, um eine größere Verzögerung der Datenströme durch Zwischenpufferung der Daten zu vermeiden.

Die an der Übertragung beteiligten Komponenten, insbesondere Sender und Empfänger sollten die Verschachtelung bzw. Zuordnung der Mobilfunksignale zu den einzelnen Standardübertragungskanälen kennen, um die Verschachtelung im Sender vorzunehmen und im Empfänger auflösen zu können. Hierzu können sowohl Sender als auch Empfänger gemäß der Erfindung entsprechende Zuordnungstabellen oder Algorithmen aufweisen. Sollen andere Zuordnungen vorgenommen werden, beispielsweise weil Mobilfunksignale anderer Standards und mit anderen Datenraten übertragen werden sollen, müssen die Zuordnungstabellen bzw. Algorithmen geändert werden.

Um diese Änderungen zu vermeiden, und den damit verbundenen Aufwand möglichst gering zu halten, können gemäß der Erfindung mit wenigen Zusatzinformationen Zuordnungsvorschriften für die verschachtelten Abtastwerte zu den einzelnen Datenströmen von Mobilfunksignalen erzeugt werden. Diese Vorschriften können in Komplexität und Auslastung der Übertragungskapazität den jeweiligen Bedürfnissen angepasst werden. Im Folgenden wird nun anhand weiterer Ausführungsbeispiele dieser Aspekt der Erfindung genauer erläutert.

Ein Beispiel einer Zuordnungsvorschrift soll anhand eines modifizierten CPRI-Übertragungsstandards erläutert werden. Der originale CPRI-Übertragungsstandard ist dadurch gekennzeichnet, dass

1. die zu übertragenden Daten in Blöcken angeordnet sind.
2. die Blöcke mit der Rate R = 3,84 MHz übertragen werden.
3. jeder Block ein fest definiertes Nutz- und ein fest definiertes Kontrolldatenfeld enthält und
4. jedes Nutzdatenfeld m Abtastwerte enthält.

Oben wurde ein Beispiel einer Zuordnungsvorschrift für einen modifizierten CPRI-Übertragungsstandard gemäß der Erfindung beschrieben. Hierbei wurden in jedem Block für die Übertragung eines Basisbandsignals mit der Datenrate $r_1 \leq m \cdot R$

$$n_1 = \mathrm{ceil}(r_1/R) \qquad (3.1)$$

der m vorhandenen Abtastwerte für die Übertragung fest reserviert, wobei ceil ein grundsätzliches Aufrunden und floor ein grundsätzliches Abrunden bedeutet.

Der Zeitpunkt der Verfügbarkeit $t_{j1}$ des $j_1$-ten Abtastwertes mit dem Zeitversatz $t_0$ ist somit

$$t_{j1} = t_0 + j_1 / (n_1 \cdot R) \qquad (3.2)$$

und der Zeitpunkt der Verwendung $t_{k1}$ des $k_1$-ten Abtastwertes mit der Rate $r_1$ und dem Zeitversatz $t_1$

$$t_{k1} = t_1 + k_1 / r_1 \qquad (3.3)$$

Aus der Kausalitätsbeziehung

$$t_{j1} \leq t_{k1} \qquad (3.4)$$

folgt die Formel

$$j_1 = \text{floor}(n_1 \cdot R \cdot (t_1 - t_0 + k_1/r_1)) \quad (3.5)$$

mit der die Zuordnung des $j_1$-ten innerhalb der fest reservierten verfügbaren Abtastwerte zum $k_1$-ten benötigten Abtastwert vorgenommen werden kann.

Ein Nachteil dieses Verfahrens besteht darin, dass möglicherweise viele Abtastwerte ungenutzt reserviert werden und dadurch die gesamte Übertragungskapazität nicht vollständig genutzt wird. Dieser ungenutzte Anteil ist besonders groß bei Basisbandsignalen mit sehr kleiner Datenrate $r_i$ oder Datenraten knapp über einem ganzzahligen Vielfachen von R.

Ein erstes erfindungsgemäßes Verfahren zur Verbesserung der Effizienz besteht nun darin, dass jeweils B aufeinander folgende Blöcke zu einer Übertragungseinheit zusammengefasst werden. Diese Übertragungseinheiten werden demzufolge mit der Rate $R_B = R/B$ übertragen und enthalten $m_B = m \cdot B$ Abtastwerte.

Die Anzahl der fest reservierten Abtastwerte $n_{B1}$ innerhalb jeder Übertragungseinheit kann jetzt mit einer beliebig genauen, durch B einstellbaren Granularität erfolgen.

$$n_{B1} = \text{ceil}(r_1 \cdot B/R) \qquad (3.6)$$

Die Zuordnung des $j_1$-ten innerhalb der fest reservierten verfügbaren Abtastwerte zum $k_1$-ten benötigten Abtastwert erfolgt jetzt mit der Formel

$$j_1 = \text{floor}(n_{B1} \cdot R \cdot (t_1 - t_0 + k_1/r_1)/B) \qquad (3.7)$$

Dieses Verfahren wird auf jedes einzelne Basisbandsignal angewendet, also

$$j_i = \text{floor}(n_{Bi} \cdot R \cdot (t_i - t_0 + k_i/r_i)/B) \qquad (3.8)$$

Die Anordnung der fest reservierten Abtastwerte $n_{Bi}$ kann nach verschiedenen Methoden vorgenommen werden.

FIG 6 zeigt hierzu ein Beispiel mit einer Übertragung von 3 Signalen mit $r_1$=5Msps, $r_2$ = 1.4 Msps und $r_3$ = 1.72 Msps über einen CPRI Link mit 614.4 Mbps. Die geforderte IQ-Wortbreite beträgt jeweils 2x15 bit, was einem Abtastwert entspricht. In diesem Beispiel werden jeweils B=4 aufeinander folgende Blöcke ("CPRI basic frames") zu einer gemeinsamen Übertragungseinheit zusammengefasst.

In Erweiterung dieses Verfahrens ist es möglich, innerhalb eines Protokolldatenstromes unterschiedliche signalspezifische Granularitätswerte $B_i$ (i = 1, ..., L) zu verwenden, wobei L der Anzahl zu übertragender Basisbandsignale entspricht. Auf diese Weise kann jedem Basisbandsignal ein optimal angepasster Granularitätsfaktor B gewidmet werden. Beträgt das Ratenverhältnis $r_i$/R beispielsweise 1/3, so bietet sich ein Wert von B=3 an.

In einem zweiten erfindungsgemäßen Verfahren wird aus L Basisbandsignalen mit jeweils identischer Datenrate

oder ganzzahligen Vielfachen $N_i$ davon $r_i = N_i \cdot r$ (i=1..L) zunächst ein gemeinsames Signal mit F-facher Datenrate $r_{ges}=F \cdot r$ generiert, welches dann wie oben beschrieben, übertragen wird.

$$F = \sum_{i=1}^{L} N_i$$

Der Vorteil dieser Vorgehensweise besteht darin, dass zur Übertragung dieses neuen Signals insgesamt $n1=ceil(F \cdot r/R)$ Abtastwerte zu reservieren sind. Im Unterschied dazu würde die getrennte Übertragung der L Einzelsignale

$$n_2 = \sum_{i=1}^{L} ceil(N_i \cdot r/R)$$

Abtastwerte beanspruchen. Insbesondere für große L-Werte ist mit diesem Verfahren eine deutlich effizientere Nutzung der verfügbaren Übertragungskapazität möglich.

FIG 7 zeigt als Beispiel hierzu eine effiziente Übertragung von 7 Signalen mit $r_i$ = r = 2 Msps über einen CPRI-Link mit 614.4 Mbps und 2x15 bit IQ-Wortbreite:

> Dies erfordert eine Reservierung von n = ceil(7-2Msps/3.84 Msps) = 4 Abtastwerten (Linkkapazität damit erschöpft!). Zum Vergleich: die getrennte Übertragung der 7 Einzelsignale hätte eine Reservierung von n = 7 · ceil(2 Msps / 3.84 Msps) = 7 Abtastwerten bedeutet. Bei der geforderten IQ-Wortbreite von 2x15 bit würde dies die verfügbare Linkkapazität deutlich überschreiten!

In einem dritten erfindungsgemäßen Verfahren dient wiederum das Verfahren zur Zuordnung für einen modifizierten CPRI-Übertragungsstandard gemäß der Erfindung als Ausgangspunkt. Im Unterschied dazu erfolgt die Reservierung nicht basisbandsignalweise, sondern in Gruppen aus mehreren Basisbandsignalen. Für eine Gruppe aus L Basisbandsignalen werden dann

$$n = ceil\left(\frac{\sum_{i=1}^{L} r_i}{R}\right) \quad ; \sum_{i=1}^{L} r_i \leq m \cdot R \qquad (3.9)$$

der m vorhandenen Abtastwerte für die Übertragung fest reserviert. Die Zuordnung des ersten Basisbandsignals erfolgt formal genauso, wie in Gleichung (3.5). Hierin wurde $n_1$ durch n ersetzt, welches nun die Anzahl der reservierten Abtastwerte für die gesamte Gruppe von Basisbandsignalen repräsentiert.

$$j_1 = floor(n \cdot R \cdot (t_1 - t_0 + k_1/r_1)) \qquad (3.10)$$

Die nicht mit $j_1$ belegten, fest reservierten Abtastwerte können mit der folgenden Formel beschrieben werden:

$$g_1 = ceil(n \cdot R \cdot (t_1 - t_0 + (h_2+1)/(n \cdot R - r_1))) - 1;$$

$$h_2 = 0, 1, 2, 3, \ldots \qquad (3.11)$$

Die Folge $g_1$ ist also komplementär zur Folge $j_1$ und hat die mittlere Datenrate $n \cdot R - r_1$. Auf diese Folge kann das zweite Basisbandsignal abgebildet werden.

$$J_2 = floor((n \cdot R - r_1) \cdot (t_2 - t_0 + k_2/r_2)) \quad (3.12)$$

Auch hierzu gibt es wieder eine Komplementärfolge:

$$G_2 = ceil((n \cdot R - r_1) \cdot (t_2 - t_0 + (h_3+1)/(n \cdot R - (r_1+r_2)))) - 1;$$

$$h_3 = 0, 1, 2, 3, \ldots \quad (3.13)$$

Durch das Ersetzen von $h_2$ durch $J_2$ bzw. $G_2$ erhält man die direkten Zuordnungsvorschriften für die Abtastwerte des zweiten Basisbandsignals

$$j_2 = ceil(n \cdot R \cdot (t_1 - t_0 + floor((n \cdot R - r_1) \cdot (t_2 - t_0 + k_2/r_2)+1) / (n \cdot R - r_1))) - 1 \quad (3.14)$$

und die noch nicht durch die beiden ersten Basisbandsignale belegten Abtastwerte:

$$g_2 = ceil(n \cdot R \cdot (t_1 - t_0 + ceil((n \cdot R - r_1) \cdot (t_2 - t_0 + (h_3+1)/(n \cdot R - (r_1+r_2))))/(n \cdot R - r_1))) - 1 \quad (3.15)$$

Dieses Vorgehen wird solange fortgesetzt, bis alle Basisbandsignale zugeordnet sind. Dabei gilt allgemein:

$$J_q = floor((n \cdot R - \sum_{i=1}^{q-1} r_i) \cdot (t_q - t_0 + k_q/r_q)) \quad (3.16)$$

$$G_q = ceil((n \cdot R - \sum_{i=1}^{q-1} r_i) \cdot (t_q - t_0 + (h_{q+1}+1)/(n \cdot R - \sum_{i=1}^{q} r_i))) - 1 \quad (3.17)$$

Wie aus den obigen Formeln ersichtlich, kann mit den während der gesamten Übertragung festen Werten

$r_i$ Einzelübertragungsraten ; i = 1, 2, ..., L
R Datenblockübertragungsrate, bei CPRI gilt R = 3,84 MHz

$$n = ceil\left(\frac{\sum_{i=1}^{L} r_i}{R}\right)$$

Anzahl der reservierten Abtastwerte pro Datenblock

$t_0$ Startzeitpunkt für die Übertragung der Datenblöcke
$t_i$ Startzeitpunkt für das i-te Basisbandsignal

jedem Datenstrom die entsprechende Folge von Abtastwerten zugeordnet werden. Deshalb braucht diese Information idealerweise nur einmal übertragen werden. Als einzige variable Größe wird der aktuelle Index des Abtastwertes aus der Folge $k_i$ = 0, 1, 2, ... benötigt. Diese kann mit einem einfachen Zähler generiert werden.

Im Falle einer fehlerhaften Übertragung der festen Werte würde die Folge $j_i$ jedoch Fehler aufweisen und unter Umständen auf signalfremde Abtastwerte zugreifen. Deshalb wird eine redundante Übertragung dieser Information, vorteilhafterweise mit Fehlerschutz oder Fehlererkennung, empfohlen. Wird der aktuelle Index des Abtastwertes aus der Folge $k_i$ = 0, 1, 2, ... falsch ermittelt, kommt es nur auf einen falschen Zugriff innerhalb der eigenen Abtastwerte, was beispielsweise eine doppelte Übertragung oder Auslassung von Abtastwerten bzw. eine variable Verzögerung des Datenstroms bewirken kann.

Die Kausalitätsbeziehung in der Ungleichung 3.4 beschreibt den Fall, dass die Daten an der Schnittstelle (z.B. CPRI) vorher oder zeitgleich bereitstehen müssen, um mit der Datenrate $r_i$ weiterverarbeitet werden zu können. Für den Fall, dass die Schnittstelle die Daten aufnimmt, die mit der Datenrate $r_i$ angeliefert werden, gilt diese Beziehung umgekehrt:

$$t_{j1} \geq t_{k1} \qquad (3.18)$$

Daraus folgen dann die Beziehungen

$$J_q = \mathrm{ceil}((n \cdot R - \sum_{i=1}^{q-1} r_i) \cdot (t_q - t_0 + k_q/r_q)) \qquad (3.19)$$

und

$$G_q = \mathrm{floor}((n \cdot R - \sum_{i=1}^{q-1} r_i) \cdot (t_q - t_0 + h_{q+1}/( n \cdot R - \sum_{i=1}^{q} r_i))) + 1 \qquad (3.20)$$

mit $J_1 = j_1$ und $G_1 = g_1$.

Ebenfalls denkbar sind die Kausalitätsbeziehungen

$$t_{j1} < t_{k1} \qquad (3.21)$$

bzw.

$$t_{j1} > t_{k1} \qquad (3.22)$$

Die entsprechenden Formeln lauten für die Beziehung (3.21)

$$J_q = \mathrm{ceil}((n \cdot R - \sum_{i=1}^{q-1} r_i) \cdot (t_q - t_0 + (k_q+1)/r_q)) - 1 \qquad (3.23)$$

und

$$G_q = \mathrm{floor}((n \cdot R - \sum_{i=1}^{q-1} r_i) \cdot (t_q - t_0 + h_{q+1}/( n \cdot R - \sum_{i=1}^{q} r_i))) \qquad (3.24)$$

sowie für die Beziehung (3.22)

$$J_q = \mathrm{floor}((n \cdot R - \sum_{i=1}^{q-1} r_i) \cdot (t_q - t_0 + k_q/r_q)) + 1 \qquad (3.25)$$

und

$$G_q = \mathrm{ceil}((n \cdot R - \sum_{i=1}^{q-1} r_i) \cdot (t_q - t_0 + h_{q+1}/(n \cdot R - \sum_{i=1}^{q} r_i))) \qquad (3.26)$$

jeweils mit $J_1 = j_1$ und $G_1 = g_1$.

Beispiel: effiziente Übertragung dreier Signale mit nachfolgend genannten Abtastraten:

Signal 1: $r_1$ = 1.4 Msps
Signal 2: $r_2$ = 1.68 Msps
Signal 3: $r_3$ = 4.0 Msps

über einen CPRI-Link mit 614.4 Mbps und 2x15 bit IQ Wortbreite.

Dies erfordert eine Reservierung von n = ceil(7.08 MHz/3.84 MHz) = 2 Abtastwerten pro Übertragungseinheit

Die FIG 8A zeigt das Mapping von Signal 1 $\rightarrow$ verbleibende Restrate: 2 x 3.84MHz - 1.4 MHz = 6.28 MHz, die FIG 8B das Mapping von Signal 2 $\rightarrow$ verbleibende Restrate: 2 x 3.84 MHz - 1.4 MHz - 1.68 MHz = 4.6 MHz und die FIG 8C das Mapping von Signal 3 $\rightarrow$ verbleibende Restrate: 2 x 3.84 MHz - 1.4 MHz - 1.68 MHz - 4 MHz = 0.6 MHz.

In einem vierten erfindungsgemäßen Verfahren wird jedem Basisbandsignal ein separater Teil-Übertragungskanal an einer festen Stelle in jedem Übertragungsrahmen zugeordnet. Im Unterschied zu den anderen, vorhergehenden Verfahren wird jedoch die Bitbreite jedes Teil-Übertragungskanals $S_i$ an die Abtastrate $r_i$ und Abtastwert-Bitgröße $s_i$ des dazugehörigen Basisbandsignals wie folgt angepasst:

$$S_i = \mathrm{ceil}\left(s_i \cdot \frac{r_i}{R}\right)$$

R ist hierbei die Übertragungsrahmen-Rate. Aus der Formel ist ersichtlich, dass sich die Bitbreite eines Teil-Übertragungskanals $S_i$ von der Abtastwert-Bitgröße $s_i$ des dazugehörigen Basisbandsignals unterscheiden kann. Demzufolge enthält der Teil-Übertragungskanal in einem Übertragungsrahmen nicht notwendigerweise einen oder mehrere komplette Abtastwerte, sondern nur Teile desselben.

Wegen des unbedingten Aufrundens in der obigen Formel werden durch den Teil-Übertragungskanal mehr Bits belegt als tatsächlich genutzt. Deshalb können in einigen Übertragungsrahmen ungenutzte Bits enthalten sein. Insgesamt ist die Auslastung der Übertragungskapazität jedoch höher als bei den Verfahren, bei denen eine feste Anzahl von Teil-Übertragungskanälen fester Bitbreite für jedes Basisbandsignal reserviert wurde.

Gegenüber den obigen ersten bis dritten Verfahren besteht der Vorteil des vierten Verfahrens darin, dass für die Zuordnung der Basisbandsignalströme keine Formeln oder Look-up-Tabellen benötigt werden, da die Position und Größe der dazugehörigen Daten in jedem Übertragungsrahmen die gleiche ist. Somit besteht auch keine Gefahr der versehentlichen Überschneidung zweier Datenströme, wenn aus irgendeinem Grund (Zähler überspringt eine Zahl, ein oder mehrere Übertragungsrahmen werden zusätzlich eingefügt oder gehen verloren) die Zuordnung falsch berechnet wird.

Für die Zuordnung der Daten innerhalb eines Teil-Übertragungskanals wird jedoch eine Formel oder Look-up-Tabelle benötigt, weil meist mehr Bits durch den Teil-Übertragungskanal belegt als genutzt werden und nur auf die genutzten Bits zugegriffen werden soll.

Jeder Teil-Übertragungskanal stellt eine Bitrate von

$$R_{bi} = S_i \cdot R$$

zur Verfügung. Erforderlich wäre nur eine Bitrate von

$$r_{bi} = s_i \cdot r_i \qquad 4.a)$$

Allgemein kann eine Zuordnung nach folgender Vorschrift erfolgen:

$$j_{bi} = \mathrm{floor}(S_i \cdot R \cdot (t_i - t_0 + k_{bi}/r_{bi}));$$

$$k_{bi} = 0,\ 1,\ 2,\ \dots$$

wobei $j_{bi}$ jetzt der Bitindex innerhalb des Teil-Übertragungskanals ist und sich fortlaufend über alle Übertragungsrahmen erstreckt. Hierbei wird der Datenstrom des Basisbandsignals bitweise auf den Teil-Übertragungskanal abgebildet. Zwischen die genutzten Bits werden Füllbits eingefügt, was auch innerhalb eines Abtastwertes passieren kann.

4.b) Will man erreichen, dass innerhalb eines Abtastwertes keine und nur noch zwischen den Abtastwerten Füllbits eingefügt werden, kann folgende Zuordnungsvorschrift verwendet werden:

$$j_{bi} = \mathrm{floor}(S_i \cdot R \cdot (t_i - t_0 + \mathrm{floor}(k_{bi}/s_i)\ /\ r_i)) + \mathrm{mod}(k_{bi}, s_i)$$

$$k_{bi} = 0,\ 1,\ 2,\ \dots$$

wobei $\mathrm{mod}(k_{bi},s_i)$ der Rest ist, den $k_{bi}$, bei der Division durch $s_i$ lässt.

4.c) Eine weitere Möglichkeit der Anordnung der Füllbits besteht darin, dass sowohl die genutzten Bits als auch die ungenutzten Füllbits in Gruppen der Größe eines Abtastwertes $s_i$ angeordnet werden. Dies hat den Vorteil, dass der Datenstrom nicht mehr bitweise sondern nur noch abtastwerteweise sortiert werden muss. Dazu kann folgende Formel verwendet werden:

$$j_{bi} = \mathrm{floor}((S_i \cdot R/s_i) \cdot (t_i - t_0 + \mathrm{floor}(k_{bi}/s_i)\ /\ r_i)) \cdot s_i + \mathrm{mod}(k_{bi}, s_i);$$

$$k_{bi} = 0,\ 1,\ 2,\ \dots$$

Bei Beschränkung der Indizierung auf die Abtastwerte der Größe $s_i$ reduziert sich diese Formel auf :

$$j_i = \mathrm{floor}((S_i \cdot R/s_i) \cdot (t_i - t_0 + k_i/\ r_i));$$

$$k_i = 0,\ 1,\ 2,\ \dots$$

4.1.a) In der Praxis führt die fortlaufende Indizierung irgendwann zu einem Zählerüberlauf, was ein definiertes Zurücksetzen beider Laufvariablen $j_{bi}$ und $k_{bi}$ mit entsprechendem Korrekturwert für $t_i$ erforderlich macht.

4.1.b) Besonders vorteilhaft ist das Zurücksetzen nach $A_{Fr}$ aufeinander folgenden Übertragungsrahmen, wenn die Anzahl der benutzten Bits

$$n_{bi} = s_i \cdot r_i \cdot \frac{A_{Fr}}{R}$$

eine ganze Zahl ergibt. Bei der Methode nach 4.a) ist keine Korrektur von $t_i$ erforderlich. Bei der Methode nach 4.b) oder 4.c) kann jedoch eine Korrektur von $t_i$ erforderlich werden, wenn die Anzahl der benutzten Bits $n_{bi}$ keine ganze Anzahl von Abtastwerten $n_{Si}$ ergibt.

4.1.c) Noch vorteilhafter ist das Zurücksetzen nach $A_{Fr}$ aufeinander folgenden Übertragungsrahmen, wenn die Anzahl der benutzten Bits eine ganze Anzahl von Abtastwerten $n_{Si}$ ergibt.

$$n_{Si} = r_i \cdot \frac{A_{Fr}}{R}$$

Sowohl bei der Methode nach 4.a), 4.b) als auch 4.c) ist keine Korrektur von $t_i$ erforderlich. Einzig die Anzahl der Füllbits nach dem letzten Abtastwert muss nicht notwendigerweise einem ganzzahligen Vielfachen von $s_i$ entsprechen.

Beispiele:

R = 3,84 MHz
Signal mit $r_1$ = 1,4 MS/s, $s_1$ = 30 bit/S, also $r_{b1} = s_1 \cdot r_1$ = 42 Mbit/s
Dann müssen pro Übertragungsrahmen

$$S_i = \text{ceil}\left(s_1 \cdot \frac{r_1}{R}\right) = \text{ceil}\ (10{,}9375) = 11\ \text{bit}$$

belegt werden. Diese 11bit werden durchgehend über alle Übertragungsrahmen nummeriert.
Die Zuordnung der benutzten Bits nach 4.a) ergibt

$$j_{b1} = \text{floor}(S_1 \cdot R \cdot (t_1 - t_0 + k_{b1}/r_{b1})) \quad ; k_{b1} = 0,\ 1,\ 2,\ \ldots$$

Für $t_1 = t_0$ erhält man:

$j_{b1}$ = 0,1,2,3,4, … ,172,173,**174, 176**,177,178, … ,348,349,**350, 352**,353, …

d.h. an allen Positionen $j_{b1} = k \cdot 176 - 1$ wird ein Füllbit eingeschoben. Diese Füllbits können jedoch mitten in einem Abtastwert stehen (siehe Fig. 9A).
Das Bit 175 beispielsweise ist ein Füllbit und steht mitten im fünften Abtastwert (Beginn bei 0), der sich über die Bits 150-180 erstreckt. Deshalb werden in Methode 4.b) bei den Füllbits die Abtastwertgrenzen berücksichtigt. In dieser Methode verschieben sich aber immer noch die Positionen der Abtastwerte bitweise (siehe Fig. 9B).
Für eine abtastwertweise Zuordnung der Füllbits werden die Füllbits solange "gesammelt", bis ein ganzer Abtastwert (30 bit) zusammengekommen ist. Dies ist in Methode 4.c) der Fall (siehe Fig. 9C).
Nach 5280 bits, d.h. 480 Übertragungsrahmen sind 30 Füllbits angefallen, die als ganzer Abtastwert aufgefüllt werden können.
Wendet man jetzt die Methode 4.1.b) auf die obigen Beispiele an, erhält man folgendes:

Nach $A_{Fr}$ = 16 Übertragungsrahmen könnte bei der Methode 4.a) der Zähler $k_{b1}$ auf 0 zurückgesetzt werden. Danach wiederholt sich die bitweise Zuordnung ohne Berücksichtigung der Abtastwertgrenzen.

Komplizierter ist die Zuordnungsvorschrift für die Methoden 4.b) und 4.c). Neben einer Korrektur für $t_1$ muss auch eine gesamte Korrektur in der Formel vorgenommen werden, da $k_{b1}$ im Allgemeinen nicht auf 0 zurückgesetzt werden kann. Deshalb ist eine Kombination dieser Methoden weniger praktikabel.
Wendet man jedoch die Methode 4.1.c) auf die obigen Beispiele an, erhält man folgendes:

Nach $A_{Fr}$ = 96 Übertragungsrahmen könnte in allen Methoden der Zähler $k_{b1}$ auf 0 zurückgesetzt werden. Danach wiederholt sich die bit- bzw. abtastwertweise Zuordnungsvorschrift. Dies wäre besonders für die Methode 4.c) geeignet, da zum einen das Periodizitätsintervall von ursprünglich 480 Übertragungsrahmen auf 96 Übertragungsrahmen abgesenkt werden kann, andererseits aber trotzdem weiterhin der abtastwertweise Zugriff auf die Daten erfolgen kann. Die einzelnen Füllbits am Ende jedes Periodizitätsintervalls können leicht entfernt oder eingefügt werden (siehe Fig. 9D).

Mit den oben beschriebenen Verfahren ist es möglich, mit mathematischen Zuordnungsvorschriften die verschachtelten Abtastwerte den einzelnen Datenströmen mit unterschiedlicher Abtastrate zuzuordnen. Gleichzeitig liefern diese Vorschriften eine Anleitung, wie die Übertragungskapazität der Schnittstelle effizient ausgelastet werden kann. Die dazu zusätzlich erforderliche Information beschränkt sich auf ein Minimum und braucht im Idealfall nur einmal übertragen zu werden.

Damit stellt die Erfindung eine Gruppe von Verfahren zur Verfügung, mit denen eine minimal zeitverzögerte Datenübertragung von Datenströmen mit unterschiedlichen Abtastraten möglich ist. Die Übertragungskapazität der Schnittstelle kann dabei voll ausgelastet werden. So können mit dieser Erfindung höhere Datenraten als mit herkömmlichen Verfahren erzielt werden oder auch aufwändigere Schnittstellen mit höherer Übertragungsrate vermieden und eingespart werden.

Im Folgenden werden noch einige vorteilhafte Weiterbildungen der Erfindung kurz beschrieben:

1. Im ersten Verfahren werden die fest reservierten Abtastwerte für ein Basisbandsignal innerhalb einer Übertragungseinheit zusammengefasst an aufeinanderfolgenden Positionen angeordnet.

2. Im ersten Verfahren werden die fest reservierten Abtastwerte für ein Basisbandsignal innerhalb einer Übertragungseinheit verteilt angeordnet, insbesondere auch vorteilhafterweise nach den Zuordnungsvorschriften des dritten Verfahrens. Die $n_{Bi}$ fest reservierten Abtastwerte innerhalb von B aufeinanderfolgenden Datenblöcken bilden ihrerseits eine Datenfolge mit der Rate

$$r_{Bi} = n_{Bi} \cdot R/B = R \cdot \mathrm{ceil}(r_i \cdot B/R)/B$$

Setzt man die $r_{Bi}$ anstelle der $r_i$ in die Formeln des dritten Verfahrens ein, erhält man für jedes Basisbandsignal eine verteilte Anordnung der Abtastwerte innerhalb einer jeden Übertragungseinheit.

3. Der Faktor B im ersten Verfahren wird mit

$$B = \mathrm{kgV}(1,\ R/r_1,\ R/r_2,\ \ldots,\ R/r_L) \qquad (5.1)$$

bestimmt, so dass $B \cdot r_i / R$ für alle i eine ganze Zahl ergibt (kgV ist das kleinste gemeinsame Vielfache). In jeder Übertragungseinheit werden dann gleich viele Abtastwerte benutzt. Somit bleibt kein reservierter Abtastwert ungenutzt, wodurch die Effizienz steigt.

4. Jeder Zeitversatz $t_i$ kann auf 0 gesetzt werden, wenn eine zusätzliche Verzögerung von maximal $1/r_i$ in Kauf genommen und eine zusätzliche Pufferzelle für das jeweilige Basisbandsignal bereitgestellt wird.

5. Jeder Zeitversatz $t_i$ kann auf einen beliebigen Wert zwischen 0 und $1/r_i$ gesetzt werden, um eine vorteilhafte Anordnung der Abtastwerte im Datenblock zu erzielen.

6. Im dritten Verfahren können bei fortlaufender Indizierung der $k_q$ sehr große Zahlen entstehen. Um einen Überlauf zu vermeiden, empfiehlt sich ein periodisches Zurücksetzen des Zählerstandes für jedes $k_q$ alle $B_z$ Datenblöcke. Dabei muß im allgemeinen Fall auch der Wert für $t_q$ angepasst werden. Die Indizierung für $J_{qz}$ beginnt dann wieder mit 0.

Besonders vorteilhaft ist die Wahl von $B_z$ gemäß der 3. vorteilhaften Weiterbildung mit

$$B_z = A \cdot \mathrm{kgV}(1,\ R/r_1,\ R/r_2,\ \ldots,\ R/r_L)$$
$$\text{A beliebige positive ganze Zahl} \qquad (5.2)$$

In diesem Fall braucht $t_q$ nicht angepasst werden. In allen Formeln muß $k_q$ dann durch $k_{qz}$ ersetzt werden:

$$k_{qz} = k_q \ \mathrm{modulo}\ (B_z \cdot r_q/R) \qquad (5.3)$$

Die Formel (3.16) sieht dann beispielsweise so aus:

$$J_{qz} = \mathrm{floor}((n \cdot R - \sum_{i=1}^{q-1} r_i) \cdot (t_q - t_0 + k_{qz}/r_q)) \quad (5.4)$$

Die Indizierung für $J_{qz}$ beginnt dann alle $B_z$ Datenblöcke wieder mit 0.

7. Diese Erfindung beschreibt Rechenvorschriften zur Ermittlung der Positionen der Abtastwerte. Im Falle einer periodischen Wiederholung des Schemas können die berechneten Positionen alternativ auch in einer sogenannten Lookup-Tabelle abgespeichert werden. Die Periodizität P kann gemäß der Formel aus der 3. vorteilhaften Weiterbildung berechnet werden.

$$P = \mathrm{kgV}(1, R/r_1, R/r_2, \ldots, R/r_L) \quad (5.5)$$

**Patentansprüche**

1. Schnittstelle (10) zur effizienten Übertragung von digitalen Signalen (12, 14), wobei die Schnittstelle (10)

   - ein vorgegebenes Übertragungsprotokoll (18), das in einem Übertragungsrahmenformat pro Übertragungsrahmen (20) einen Nutzdatenbereich zur Übertragung der digitalen Signale (12, 14) zur Verfügung stellt, und
   - Übertragungskanal-Zuordnungsmittel (22) aufweist, die ausgebildet sind, den Nutzdatenbereich in Teil-Übertragungskanäle (16) entsprechend den für die Übertragung der digitalen Signale (12, 14) benötigten Datenraten aufzuteilen und den digitalen Signalen zuzuordnen,

   **dadurch gekennzeichnet, dass** die Übertragungskanal-Zuordnungsmittel derart ausgebildet sind, dass sie bei einem ganzzahligen Verhältnis der vorgegebenen Datenrate eines Teil-Übertragungskanals und der Datenrate eines digitalen Signals Teil-Übertragungskanäle pro Übertragungsrahmen entsprechend dem ganzzahligen Verhältnis zuordnen und bei einem nicht ganzzahligen Verhältnis der vorgegebenen Datenrate eines Teil-Übertragungskanals und der Datenrate eines digitalen Signals Teil-Übertragungskanäle in mehreren zeitlich aufeinanderfolgenden Übertragungsrahmen entsprechend dem nicht ganzzahligen Verhältnis zuordnen, wobei

   - ein Übertragungsrahmen durch einen Übertragungsblock gebildet ist,
   - die Übertragungsblöcke mit einer Rate R übertragen werden,
   - jeder Übertragungsblock ein fest definiertes Nutz- und Kontrolldatenfeld umfasst,
   - jedes Nutzdatenfeld m Abtastwerte entsprechend m Teil-Übertragungskanälen umfasst, und
   - die Übertragungskanal-Zuordnungsmittel derart ausgebildet sind, dass sie $n_1$ der m Abtastwerte in jedem Übertragungsblock für Abtastwerte eines digitalen Signals mit der Abtastrate $r_1$ kleiner gleich m*R fest reservieren, mit $n_1 = \mathrm{ceil}(r_1/R)$, ceil: Funktion für grundsätzliches Aufrunden.

2. Schnittstelle nach Anspruch 1, **dadurch gekennzeichnet, dass** die Übertragungskanal-Zuordnungsmittel (22)

   - Speichermittel (24), in denen Zuordnungsvorschriften für die Zuordnung von Teil-Übertragungskanälen (16) zu einem digitalen Signal (12, 14) gespeichert sind, und
   - Prozessormittel (26) aufweisen, die derart eingerichtet sind, dass sie beim Empfang des digitalen Signals (12, 14) aus den Speichermitteln (24) die Zuordnungsvorschriften auslesen und das digitale Signal (12, 14) entsprechend den ausgelesenen Zuordnungsvorschriften einem oder mehreren Teil-Übertragungskanälen (16) zuordnet.

3. Schnittstelle nach Anspruch 1, **dadurch gekennzeichnet, dass** die Übertragungskanal-Zuordnungsmittel Prozessormittel (26) aufweisen, die derart eingerichtet sind, dass sie beim Empfang eines digitalen Signals gemäß einem Algorithmus eine Zuordnung des digitalen Signals (12, 14) zu einem oder mehreren Teil-Übertragungskanälen (16) berechnen.

4. Schnittstelle nach einem der vorhergehenden Ansprüche, **dadurch gekennzeichnet, dass** die Übertragungskanal-Zuordnungsmittel ferner ausgebildet sind, den digitalen Signalen weniger als die pro Teil-Übertragungskanal zur Verfügung stehenden Bits zuzuordnen und verschiedene Anzahlen von Bits eines Teil-Übertragungskanals eines bestimmten Übertragungsrahmens zwei oder mehr unterschiedlichen digitalen Signalen zuzuordnen.

**5.** Schnittstelle nach Anspruch 4, **dadurch gekennzeichnet, dass** die Übertragungskanal-Zuordnungsmittel ferner derart ausgebildet sind, einem digitalen Signal verschiedene Anzahlen von Bits eines Teil-Übertragungskanals eines bestimmten Übertragungsrahmens zwei oder mehr unterschiedlichen digitalen Signalen zuzuordnen.

**6.** Schnittstelle nach Anspruch 1, **dadurch gekennzeichnet, dass** die Übertragungskanal-Zuordnungsmittel ferner ausgebildet sind,

- jeweils B zeitlich aufeinander folgende Übertragungsblöcke zu einer Übertragungseinheit zusammenzufassen, die mit einer Rate $R_B$ = R/B übertragen wird und $m_B$ = m*B Abtastwerte umfasst, und
- $n_{B1}$ der $m_B$ Abtastwerte in der Übertragungseinheit für Abtastwerte eines digitalen Signals mit der Abtastrate fest zu reservieren, mit $n_{B1}$ = ceil($r_1$*B/R).

**7.** Schnittstelle nach Anspruch 6, **dadurch gekennzeichnet, dass** die Übertragungskanal-Zuordnungsmittel ausgebildet sind, die Zuordnung des $j_1$-ten innerhalb der fest reservierten Abtastwerte zum $k_1$-ten Abtastwert des digitalen Signals gemäß der folgenden Formel vorzunehmen:

$$j_1 = \mathrm{floor}(n_{B1} * R * (t_1 - t_0 + k_1/r_1)/B),$$

wobei $t_1$ und $t_0$ jeweils ein Zeitversatz und floor die Funktion für ein grundsätzliches Abrunden ist.

**8.** Schnittstelle nach Anspruch 6 oder 7, **dadurch gekennzeichnet, dass** die Übertragungskanal-Zuordnungsmittel ausgebildet sind, innerhalb eines Protokolldatenstroms jedem zu übertragenden digitalen Signal i = 1, 2, ..., L jeweils eine eigene Übertragungseinheit zuzuordnen, die $B_i$ zeitlich aufeinander folgende Übertragungsblöcke umfasst, wobei $B_i$ an das zu übertragende digitale Signal i angepasst ist.

**9.** Schnittstelle nach einem der Ansprüche 6 bis 8, **dadurch gekennzeichnet, dass** die Übertragungskanal-Zuordnungsmittel ausgebildet sind, L digitale Signale mit jeweils einer Abtastrate $r_i = N_i * r$, i = 1, 2, ..., L, die ein ganzzahliges Vielfaches $N_i$ von einer Grundabtastrate r ist, zu einem gemeinsamen digitalen Signal mit F-facher Abtastrate $r_{ges}$ = F*r mit

$$F = \sum_{i=1}^{L} N_i$$

zusammenzufassen.

**10.** Schnittstelle nach einem der Ansprüche 1 bis 5, **dadurch gekennzeichnet, dass**

- ein Übertragungsrahmen durch einen Übertragungsblock gebildet ist,
- die Übertragungsblöcke mit einer Rate R übertragen werden,
- jeder Übertragungsblock ein fest definiertes Nutz- und Kontrolldatenfeld umfasst,
- jedes Nutzdatenfeld m Abtastwerte entsprechend m Teil-Übertragungskanälen umfasst, und
- die Übertragungskanal-Zuordnungsmittel derart ausgebildet sind, dass sie n der m Abtastwerte in jedem Übertragungsblock für Abtastwerte einer Gruppe von L digitalen Signalen mit jeweiligen Abtastraten $r_i$, i = 1, 2, ... , L mit

$$R_L = \sum_{i=1}^{L} r_i \leq m \cdot R$$

fest reservieren, wobei sich die n reservierten Abtastwerte nach n = ceil($R_L$/R) bestimmen, ceil:

Funktion für grundsätzliches Aufrunden.

**11.** Schnittstelle nach Anspruch 10, **dadurch gekennzeichnet, dass** die Übertragungskanal-Zuordnungsmittel ausgebildet sind, die Zuordnung des $J_q$-ten innerhalb der fest reservierten Abtastwerte zum $k_q$-ten Abtastwert des q-ten digitalen Signals aus der Gruppe von digitalen Signalen gemäß der folgenden Formel vorzunehmen:

$$J_q = \text{floor}((n^*R - \sum_{i=1}^{q-1} r_i)^*(t_q - t_0 + k_q/r_q)),$$

wobei $t_q$ und $t_0$ jeweils ein Zeitversatz und floor die Funktion für ein grundsätzliches Abrunden ist.

**12.** Schnittstelle nach einem der Ansprüche 1 bis 5, **dadurch gekennzeichnet, dass**

- ein Übertragungsrahmen durch einen Übertragungsblock gebildet ist,
- die Übertragungsblöcke mit einer Rate R übertragen werden,
- jeder Übertragungsblock ein fest definiertes Nutz- und Kontrolldatenfeld umfasst,
- jedes Nutzdatenfeld m Abtastwerte entsprechend m Teil-Übertragungskanälen umfasst, und
- die Übertragungskanal-Zuordnungsmittel derart ausgebildet sind, dass sie jedem zu übertragenden digitalen Signal einen separaten Teil-Übertragungskanal an einer festen Stelle in jedem Übertragungsrahmen zuordnen und die Bitbreite jedes Teil-Übertragungskanals $S_i$ an die Abtastrate $r_i$ und Abtastwert-Bitgröße $s_i$ des dazugehörigen digitalen Signals wie folgt anpassen:

$$S_i = \text{ceil}\left(s_i \cdot \frac{r_i}{R}\right)$$

mit R als Übertragungsrahmen-Rate.

**13.** Funkstation mit mindestens einer Schnittstelle nach einem der vorhergehenden Ansprüche, wobei die Funkstation Module umfasst, die kommunikationsmäßig durch die mindestens eine Schnittstelle verbunden sind.

**14.** Funkstation nach Anspruch 13, **dadurch gekennzeichnet, dass** sie eine Mobilfunkbasisstation ist, in der über die mindestens eine Schnittstelle breitbandige Basisbandsignale verschiedener Mobilfunkstandards zwischen den kommunikationsmäßig verbundenen Modulen übertragen werden.

**15.** Verwendung einer Schnittstelle nach einem der Ansprüche 1 bis 12 in einer Mobilfunkbasisstation zur kommunikationsmäßigen Verbindung von Modulen der Mobilfunkbasisstation und zur Übertragung von breitbandigen Basisbandsignalen verschiedener Mobilfunkstandards zwischen den kommunikationsmäßig verbundenen Modulen.

## Claims

**1.** Interface (10) for efficiently transmitting digital signals (12, 14), wherein the interface (10) has

- a prescribed transmission protocol (18) that provides, in a transmission frame format, per transmission frame (20), a useful data area for transmitting the digital signals (12, 14), and
- transmission channel association means (22) that are configured to split the useful data area into transmission subchannels (16) in accordance with the data rates needed for transmitting the digital signals (12, 14) and to associate it with the digital signals,

**characterized in that**
the transmission channel association means are configured such that, in the event of an integer ratio for the prescribed data rate of a transmission subchannel and the data rate of a digital signal, they associate transmission subchannels per transmission frame in accordance with the integer ratio, and,
in the event of a non-integer ratio for the prescribed data rate of a transmission subchannel and the data rate of a digital signal, associate transmission subchannels in multiple temporally successive transmission frames in accordance with the non-integer ratio,
wherein

- a transmission frame is formed by a transmission block,
- the transmission blocks are transmitted at a rate R,
- each transmission block comprises a firmly defined useful and control data field,
- each useful data field comprises m samples in accordance with m transmission subchannels, and
- the transmission channel association means are configured such that they firmly reserve $n_1$ of the m samples in each transmission block for samples of a digital signal at the sampling rate $r_1$ less than or equal to m*r, where $n_1$ = ceil($r_1$/R), ceil: function for fundamental rounding-up.

2. Interface according to Claim 1, **characterized in that** the transmission channel association means (22) have

- memory means (24) that store association rules for the association of transmission subchannels (16) with a digital signal (12, 14), and
- processor means (26) that are set up such that, on receiving the digital signal (12, 14) from the memory means (24), they read the association rules and associates the digital signal (12, 14) with one or more transmission subchannels (16) in accordance with the read association rules.

3. Interface according to Claim 1, **characterized in that** the transmission channel association means have processor mans (26) that are set up such that, on receiving a digital signal, they use an algorithm to compute an association of the digital signal (12, 14) with one or more transmission subchannels (16).

4. Interface according to one of the preceding claims, **characterized in that** the transmission channel association means are further configured to associate fewer than the bits available per transmission subchannel with the digital signals and to associate different numbers of bits of a transmission subchannel of a particular transmission frame with two or more different digital signals.

5. Interface according to Claim 4, **characterized in that** the transmission channel association means are further configured so as to associate different numbers of bits of a transmission subchannel of a particular transmission frame with a digital signal two or more different digital signals.

6. Interface according to Claim 1, **characterized in that** the transmission channel association means are further configured

- to combine in each case B temporally successive transmission blocks to form a transmission unit that is transmitted at a rate $R_B$ = R/B and comprises $m_B$ = m*B samples, and
- to firmly reserve $n_{B1}$ of the $m_B$ samples in the transmission unit for samples of a digital signal at the sampling rate, where $n_{B1}$ = ceil ($r_1$*B/R).

7. Interface according to Claim 6, **characterized in that** the transmission channel association means are configured to perform the association of the $j_1$-th sample within the firmly reserved samples with the $k_1$-th sample of the digital signal in accordance with the following formula: $j_1$ = floor($n_{B1}$*R*($t_1$ - $t_0$ + $k_1$/$r_1$)/B),
where $t_1$ and $t_0$ are each a time offset and floor is the function for fundamental rounding-down.

8. Interface according to Claim 6 or 7,
**characterized in that** the transmission channel association means are configured to associate, within a protocol data stream, a respective separate transmission unit comprising $B_i$ temporally successive transmission blocks, $B_i$ matching the digital signal i to be transmitted, with each digital signal i = 1, 2, ..., L to be transmitted.

9. Interface according to one of Claims 6 to 8,
**characterized in that** the transmission channel association means are configured to combine L digital signals at a respective sampling rate $r_i$ = $N_i$*r, i = 1, 2, ..., L, which is an integer multiple $N_i$ of a basic sampling rate r, to form a common digital signal at an F-fold sampling rate $r_{tot}$ = F*r where

$$F = \sum_{i=1}^{L} N_i$$

.

**10.** Interface according to one of Claims 1 to 5,
**characterized in that**

- a transmission frame is formed by a transmission block,
- the transmission blocks are transmitted at a rate R,
- each transmission block comprises a firmly defined useful and control data field,
- each useful data field comprises m samples in accordance with m transmission subchannels, and
- the transmission channel association means are configured such that they firmly reserve n of the m samples in each transmission block for samples of a group of L digital signals at respective sampling rates ri, i = 1, 2, ..., L where

$$R_L = \sum_{i=1}^{L} r_i \leq m \cdot R$$

,

the n reserved samples being determined according to n = ceil($R_L$/R), ceil: function for fundamental rounding-up.

**11.** Interface according to Claim 10, **characterized in that** the transmission channel association means are configured to perform the association of the $J_q$-th sample within the firmly reserved samples with the $k_q$-th sample of the q-th digital signal from the group of digital signals in accordance with the following formula:

$$J_q = \mathrm{floor}((n^*R - \sum_{i=1}^{q-1} r_i)^*(t_q - t_0 + k_q/r_q)),$$

where $t_q$ and $t_0$ are each a time offset and floor is the function for fundamental rounding-down.

**12.** Interface according to one of Claims 1 to 5, **characterized in that**

- a transmission frame is formed by a transmission block,
- the transmission blocks are transmitted at a rate R,
- each transmission block comprises a firmly defined useful and control data field,
- each useful data field comprises m samples in accordance with m transmission subchannels, and
- the transmission channel association means are configured such that they associate a separate transmission subchannel at a fixed point in each transmission frame with each digital signal to be transmitted and match the bit width of each transmission subchannel $S_i$ to the sampling rate $r_i$ and sample bit size $s_i$ of the associated digital signal as follows:

$$S_i = \mathrm{ceil}\left(s_i \cdot \frac{r_i}{R}\right)$$

where R is the transmission frame rate.

**13.** Radio station having at least one interface according to one of the preceding claims, wherein the radio station comprises modules that are communicatively connected by the at least one interface.

**14.** Radio station according to Claim 13, **characterized in that** it is a mobile radio base station in which the at least one interface is used to transmit wideband baseband signals of different mobile radio standards between the communicatively connected modules.

**15.** Use of an interface according to one of Claims 1 to 12 in a mobile radio base station for communicatively connecting modules of the mobile radio base station and for transmitting wideband baseband signals of different mobile radio standards between the communicatively connected modules.

## Revendications

**1.** Interface (10) pour la transmission efficace de signaux numériques (12, 14), l'interface (10) possédant

- un protocole de transmission (18) prédéfini qui met à disposition une plage de données utiles dans un format de trame de transmission par trame de transmission (20) pour la transmission des signaux numériques (12, 14), et
- des moyens d'assignation de canal de transmission (22), lesquels sont configurés pour diviser la plage de données utiles en canaux de transmission partiels (16) conformément aux débits de données nécessaires pour la transmission des signaux numériques (12, 14) et les assigner aux signaux numériques,

**caractérisée en ce que**
les moyens d'assignation de canal de transmission sont configurés de telle sorte que
dans le cas d'un rapport entier entre le débit de données prédéfini d'un canal de transmission partiel et le débit de données d'un signal numérique, ils assignent des canaux de transmission partiels par trame de transmission conformément au rapport entier et
dans le cas d'un rapport non entier entre le débit de données prédéfini d'un canal de transmission partiel et le débit de données d'un signal numérique, ils assignent des canaux de transmission partiels dans plusieurs trames de transmission chronologiquement successives conformément au rapport non entier,

- une trame de transmission étant formée par un bloc de transmission,
- les blocs de transmission étant transmis avec un débit R,
- chaque bloc de transmission comportant un champ de données utiles et de contrôle défini de manière fixe,
- chaque champ de données utiles comportant m valeurs d'échantillonnage correspondant à m canaux de transmission partiels, et
- les moyens d'assignation de canal de transmission étant configurés de telle sorte qu'ils réservent de manière fixe $n_1$ des m valeurs d'échantillonnage dans chaque bloc de transmission pour les valeurs d'échantillonnage d'un signal numérique ayant une fréquence d'échantillonnage $r_1$ inférieure ou égale à m*R, avec $n_1$ = ceil($r_1$/R), ceil désignant la fonction d'arrondi fondamental.

**2.** Interface selon la revendication 1, **caractérisée en ce que** les moyens d'assignation de canal de transmission (22) possèdent

- des moyens de mémorisation (24), dans lesquels sont mémorisées des prescriptions d'assignation pour l'assignation de canaux de transmission partiels (16) à un signal numérique (12, 14), et
- des moyens processeurs (26) qui sont configurés de telle sorte que lors de la réception du signal numérique (12, 14), ils chargent les prescriptions d'assignation depuis les moyens de mémorisation (24) et assigne le signal numérique (12, 14) à un ou plusieurs canaux de transmission partiels (16) conformément aux prescriptions d'assignation chargées.

**3.** Interface selon la revendication 1, **caractérisée en ce que** les moyens d'assignation de canal de transmission possèdent des moyens processeurs (26) qui sont configurés de telle sorte que lors de la réception d'un signal numérique, ils calculent une assignation du signal numérique (12, 14) à un ou plusieurs canaux de transmission partiels (16) conformément à un algorithme.

**4.** Interface selon l'une des revendications précédentes, **caractérisée en ce que** les moyens d'assignation de canal de transmission sont en outre configurés pour assigner aux signaux numériques moins que les bits disponibles par canal de transmission partiel et assigner des nombres différents de bits d'un canal de transmission partiel d'une trame de transmission définie à deux signaux numériques différents ou plus.

**5.** Interface selon la revendication 4, **caractérisée en ce que** les moyens d'assignation de canal de transmission sont en outre configurés pour assigner à un signal numérique des nombres différents de bits d'un canal de transmission partiel d'une trame de transmission partielle deux signaux numériques différents ou plus.

**6.** Interface selon la revendication 1, **caractérisée en ce que** les moyens d'assignation de canal de transmission sont en outre configurés pour

- regrouper respectivement B blocs de transmission chronologiquement successifs en une unité de transmission, laquelle est transmise à un débit $R_B$ = R/B et comporte $m_B$ = m*B valeurs d'échantillonnage, et

- réserver de manière fixe $n_{B1}$ des $m_B$ valeurs d'échantillonnage dans l'unité de transmission pour les valeurs d'échantillonnage d'un signal numérique ayant la fréquence d'échantillonnage, avec $n_{B1}$ = ceil($r_1$ * B/R).

**7.** Interface selon la revendication 6, **caractérisée en ce que** les moyens d'assignation de canal de transmission sont configurés pour effectuer l'assignation de la j1-ème au sein des valeurs d'échantillonnage réservées de manière fixe à la $k_1$-ème valeur d'échantillonnage du signal numérique conformément à la formule suivante :

$$j_1 = \mathrm{floor}(n_{B1}*R*(t_1 - t_0 + k_1/r_1)/B),$$

$t_1$ et $t_0$ désignant respectivement un décalage dans le temps et floor la fonction pour un arrondi fondamental.

**8.** Interface selon la revendication 6 ou 7, **caractérisée en ce que** les moyens d'assignation de canal de transmission sont configurés pour assigner, à l'intérieur d'un flux de données de protocole, respectivement une unité de transmission propre à chaque signal numérique i = 1, 2, ..., L à transmettre, laquelle comporte $B_i$ blocs de transmission chronologiquement successifs, $B_i$ étant adapté au signal numérique i à transmettre.

**9.** Interface selon l'une des revendications 6 à 8, **caractérisée en ce que** les moyens d'assignation de canal de transmission sont configurés pour regrouper L signaux numériques ayant respectivement une fréquence d'échantillonnage $r_i = N_i*r$, i = 1, 2, ..., L, qui est un multiple entier $N_i$ d'une fréquence d'échantillonnage de base r, en un signal numérique commun ayant une fréquence d'échantillonnage de F fois, $r_{ges}$ = F*r, avec

$$F = \sum_{i=1}^{L} N_i \,.$$

**10.** Interface selon l'une des revendications 1 à 5, **caractérisée en ce que**

- une trame de transmission est formée par un bloc de transmission,
- les blocs de transmission sont transmis avec un débit R,
- chaque bloc de transmission comporte un champ de données utiles et de contrôle défini de manière fixe,
- chaque champ de données utiles comporte m valeurs d'échantillonnage correspondant à m canaux de transmission partiels, et
- les moyens d'assignation de canal de transmission sont configurés de telle sorte qu'ils réservent de manière fixe n des m valeurs d'échantillonnage dans chaque bloc de transmission pour les valeurs d'échantillonnage d'un groupe de L signaux numériques ayant respectivement des fréquences d'échantillonnage $r_i$, i = 1, 2, ..., L, avec

$$R_L = \sum_{i=1}^{L} r_i \leq m \cdot R$$

les n valeurs d'échantillonnage réservées étant définies selon n = ceil($R_L$/R), ceil désignant la fonction d'arrondi fondamental.

**11.** Interface selon la revendication 10, **caractérisée en ce que** les moyens d'assignation de canal de transmission sont configurés pour effectuer l'assignation de la $J_q$-ème au sein des valeurs d'échantillonnage réservées de manière fixe à la $k_q$-ème valeur d'échantillonnage du q-ème signal numérique du groupe de signaux numériques conformément à la formule suivante :

$$J_q = \mathrm{floor}((n*R - \textstyle\sum_{i=1}^{q-1} r_i)*(t_q - t_0 + k_q/r_q)),$$

$t_q$ et $t_0$ désignant respectivement un décalage dans le temps et floor la fonction pour un arrondi fondamental.

**12.** Interface selon l'une des revendications 1 à 5, **caractérisée en ce que**

- une trame de transmission est formée par un bloc de transmission,
- les blocs de transmission sont transmis avec un débit R,
- chaque bloc de transmission comporte un champ de données utiles et de contrôle défini de manière fixe,
- chaque champ de données utiles comporte m valeurs d'échantillonnage correspondant à m canaux de transmission partiels, et
- les moyens d'assignation de canal de transmission sont configurés de telle sorte qu'ils assignent à chaque signal numérique à transmettre un canal de transmission partiel séparé en un endroit fixe dans chaque trame de transmission et adaptent la largeur binaire de chaque canal de transmission partiel Si à la fréquence d'échantillonnage $r_i$ et à la taille binaire de valeur d'échantillonnage $s_i$ du signal numérique associé de la manière suivante :

$$Si = ceil(si \cdot \frac{r_i}{R})$$

R désignant le débit de trame de transmission.

**13.** Station radioélectrique comprenant au moins une interface selon l'une des revendications précédentes, la station radioélectrique comportant des modules qui sont reliés en communication par le biais de l'au moins une interface.

**14.** Station radioélectrique selon la revendication 13, **caractérisée en ce qu'**elle est une station de base de radiocommunication mobile dans laquelle sont transmis, par le biais de l'au moins une interface, des signaux en bande de base à large bande de différentes normes de radiocommunication mobile entre les modules reliés en communication.

**15.** Utilisation d'une interface selon l'une des revendications 1 à 12 dans une station de base de radiocommunication mobile pour la liaison en communication de modules de la station de base de radiocommunication mobile et pour la transmission de signaux en bande de base à large bande de différentes normes de radiocommunication mobile entre les modules reliés en communication.

FIG 1

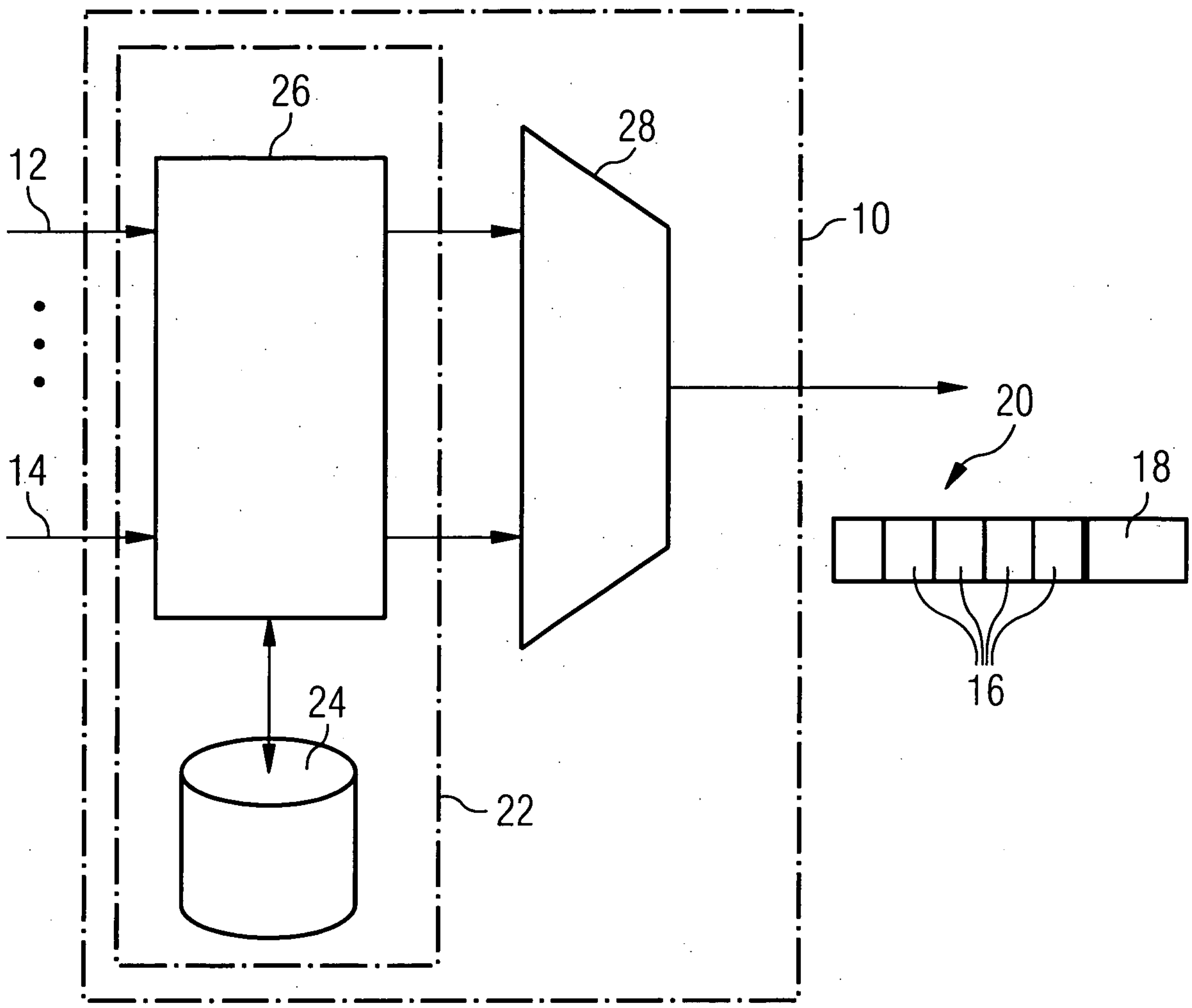

FIG 2

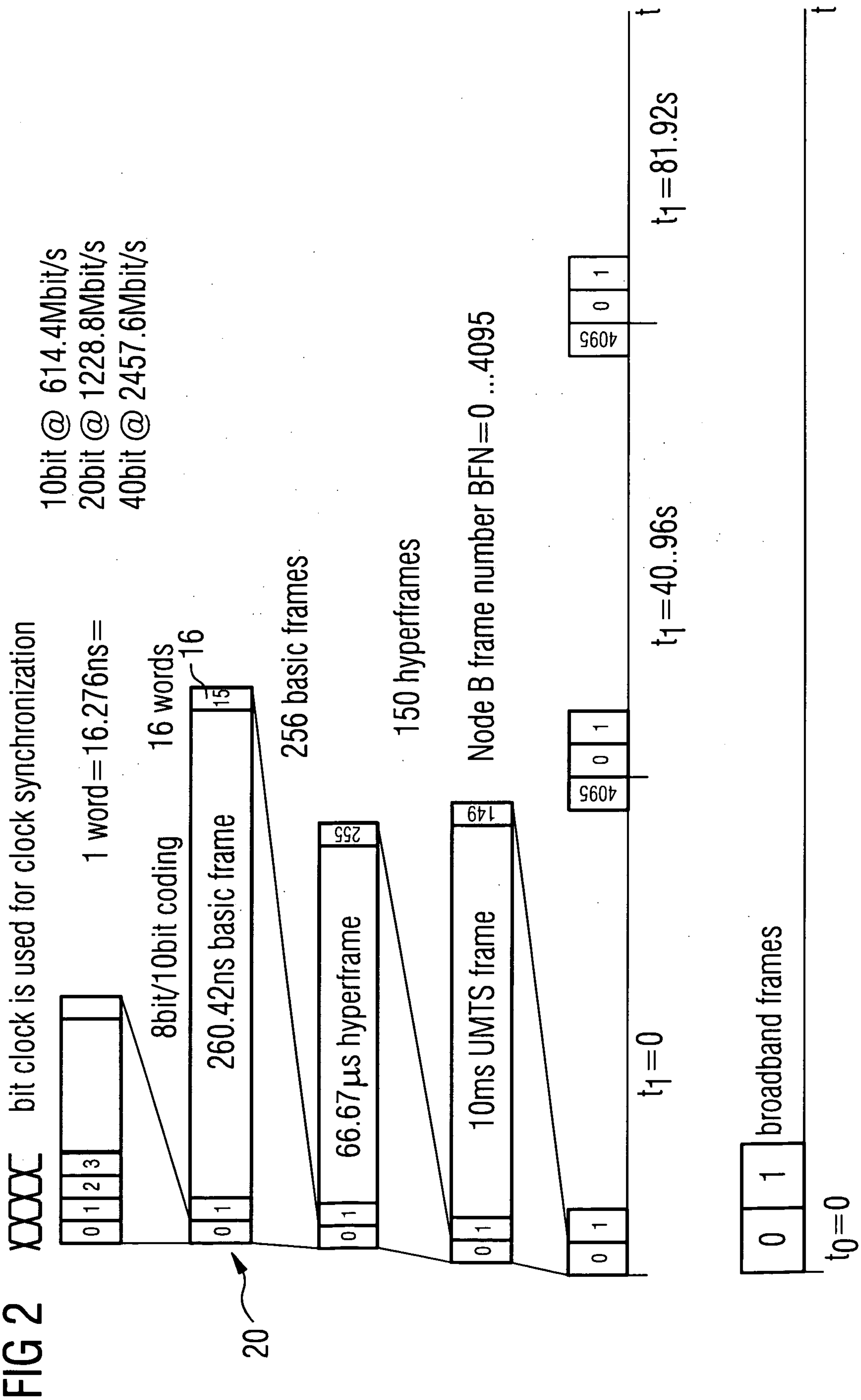
bit clock is used for clock synchronization
1 word=16.276ns=
10bit @ 614.4Mbit/s
20bit @ 1228.8Mbit/s
40bit @ 2457.6Mbit/s
8bit/10bit coding
16 words
16
260.42ns basic frame
20
256 basic frames
66.67µs hyperframe
150 hyperframes
10ms UMTS frame
Node B frame number BFN=0 ...4095
$t_1$=0
$t_1$=40..96s
$t_1$=81.92s
broadband frames
$t_0$=0
t

# FIG 3

| Z | S | D | D | D | D | D | D | D | D | D | D | D | D | D | D | D | S | ... |
|---|---|---|---|---|---|---|---|---|---|---|---|---|---|---|---|---|---|---|
| A | Control Word | I0-0 | I1-1 | I2-2 | I3-3 | I4-4 | I5-5 | I6-6 | I7-7 | I8-8 | I9-9 | I10-10 | I11-11 | I12-12 | I13-13 | 14-MSE | Control Word | ... |
| B | | Q0-0 | Q1-1 | Q2-2 | Q3-3 | Q4-4 | Q5-5 | Q6-6 | Q7-7 | Q8-8 | Q9-9 | Q10-10 | Q11-11 | Q12-12 | Q13-13 | 14-MSE | | ... |
| C | | I0-1 | I1-2 | I2-3 | I3-4 | I4-5 | I5-6 | I6-7 | I7-8 | I8-9 | I9-10 | I10-11 | I11-12 | I12-13 | 13-MSE | I15-0 | | ... |
| D | | Q0-1 | Q1-2 | Q2-3 | Q3-4 | Q4-5 | Q5-6 | Q6-7 | Q7-8 | Q8-9 | Q9-10 | Q10-11 | Q11-12 | Q12-13 | 13-MSE | Q15-0 | | ... |
| E | | I0-2 | I1-3 | I2-4 | I3-5 | I4-6 | I5-7 | I6-8 | I7-9 | I8-10 | I9-11 | I10-12 | I11-13 | 12-MSE | I14-0 | I15-1 | | ... |
| F | | Q0-2 | Q1-3 | Q2-4 | Q3-5 | Q4-6 | Q5-7 | Q6-8 | Q7-9 | Q8-10 | Q9-11 | Q10-12 | Q11-13 | 12-MSE | Q14-0 | Q15-1 | | ... |
| G | | I0-3 | I1-4 | I2-5 | I3-6 | I4-7 | I5-8 | I6-9 | I7-10 | I8-11 | I9-12 | I10-13 | 11-MSE | I13-0 | I14-1 | I15-2 | | ... |
| H | | Q0-3 | Q1-4 | Q2-5 | Q3-6 | Q4-7 | Q5-8 | Q6-9 | Q7-10 | Q8-11 | Q9-12 | Q10-13 | 11-MSE | Q13-0 | Q14-1 | Q15-2 | | ... |

| | | | | | | | | | | | | | | | | | | |
|---|---|---|---|---|---|---|---|---|---|---|---|---|---|---|---|---|---|---|
| A | Control Word | I0-4 | I1-5 | I2-6 | I3-7 | I4-8 | I5-9 | I6-10 | I7-11 | I8-12 | I9-13 | 10-MSE | I12-0 | I13-1 | I14-2 | I15-3 | Control Word | ... |
| B | | Q0-4 | Q1-5 | Q2-6 | Q3-7 | Q4-8 | Q5-9 | Q6-10 | Q7-11 | Q8-12 | Q9-13 | 10-MSE | Q12-0 | Q13-1 | Q14-2 | Q15-3 | | ... |
| C | | I0-5 | I1-6 | I2-7 | I3-8 | I4-9 | I5-10 | I6-11 | I7-12 | I8-13 | I9-MSE | I11-0 | I12-1 | I13-2 | I14-3 | I15-4 | | ... |
| D | | Q0-5 | Q1-6 | Q2-7 | Q3-8 | Q4-9 | Q5-10 | Q6-11 | Q7-12 | Q8-13 | Q9-MSE | Q11-0 | Q12-1 | Q13-2 | Q14-3 | Q15-4 | | ... |
| E | | I0-6 | I1-7 | I2-8 | I3-9 | I4-10 | I5-11 | I6-12 | I7-13 | I8-MSE | I10-0 | I11-1 | I12-2 | I13-3 | I14-4 | I15-5 | | ... |
| F | | Q0-6 | Q1-7 | Q2-8 | Q3-9 | Q4-10 | Q5-11 | Q6-12 | Q7-13 | Q8-MSE | Q10-0 | Q11-1 | Q12-2 | Q13-3 | Q14-4 | Q15-5 | | ... |
| G | | I0-7 | I1-8 | I2-9 | I3-10 | I4-11 | I5-12 | I6-13 | I3-MSE | I9-0 | I10-1 | I11-2 | I12-3 | I12-4 | I14-5 | I15-6 | | ... |
| H | | Q0-7 | Q1-8 | Q2-9 | Q3-10 | Q4-11 | Q5-12 | Q6-13 | Q3-MSE | Q9-0 | Q10-1 | Q11-2 | Q12-3 | Q13-4 | Q14-5 | Q15-6 | | ... |

| | | | | | | | | | | | | | | | | | | |
|---|---|---|---|---|---|---|---|---|---|---|---|---|---|---|---|---|---|---|
| A | Control Word | I0-8 | I1-9 | I2-10 | I3-11 | I4-12 | I5-13 | I6-MSE | I8-0 | I9-1 | I10-2 | I11-3 | I12-4 | I13-5 | I14-6 | I15-7 | Control Word | ... |
| B | | Q0-8 | Q1-9 | Q2-10 | Q3-11 | Q4-12 | Q5-13 | Q6-MSE | Q8-0 | Q9-1 | Q10-2 | Q11-3 | Q12-4 | Q13-5 | Q14-6 | Q15-7 | | ... |
| C | | I0-9 | I1-10 | I2-11 | I3-12 | I4-13 | I5-MSE | I7-0 | I8-1 | I9-2 | I10-3 | I11-4 | I12-5 | I13-6 | I14-7 | I15-8 | | ... |
| D | | Q0-9 | Q1-10 | Q2-11 | Q3-12 | Q4-13 | Q5-MSE | Q7-0 | Q8-1 | Q9-2 | Q10-3 | Q11-4 | Q12-5 | Q13-6 | Q14-7 | Q15-8 | | ... |
| E | | I0-10 | I1-11 | I2-12 | I3-13 | I4-MSE | I6-0 | I7-1 | I8-2 | I9-3 | I10-4 | I11-5 | I12-6 | I13-7 | I14-8 | I15-9 | | ... |
| F | | Q0-10 | Q1-11 | Q2-12 | Q3-13 | Q4-MSE | Q6-0 | Q7-1 | Q8-2 | Q9-3 | Q10-4 | Q11-5 | Q12-6 | Q13-7 | Q14-8 | Q15-9 | | ... |
| G | | I0-11 | I1-12 | I2-13 | I3-MSE | I5-0 | I6-1 | I7-2 | I8-3 | I9-4 | I10-5 | I11-6 | I12-7 | I13-8 | I14-9 | I15-10 | | ... |
| H | | Q0-11 | Q1-12 | Q2-13 | Q3-MSE | Q5-0 | Q6-1 | Q7-2 | Q8-3 | Q9-4 | Q10-5 | Q11-6 | Q12-7 | Q13-8 | Q14-9 | Q15-10 | | ... |

| | | | | | | | | | | | | | | | | | | |
|---|---|---|---|---|---|---|---|---|---|---|---|---|---|---|---|---|---|---|
| A | Control Word | I0-12 | I1-13 | I2-MSE | I4-0 | I5-1 | I6-2 | I7-3 | I8-4 | I9-5 | I10-6 | I11-7 | I12-8 | I13-9 | I14-10 | I15-11 | Control Word | ... |
| B | | Q0-12 | Q1-13 | Q2-MSE | Q4-0 | Q5-1 | Q6-2 | Q7-3 | Q8-4 | Q9-5 | Q10-6 | Q11-7 | Q12-8 | Q13-9 | Q14-10 | Q15-11 | | ... |
| C | | I0-13 | I1-MSE | I3-0 | I4-1 | I5-2 | I6-3 | I7-4 | I8-5 | I9-6 | I10-7 | I11-8 | I12-9 | I13-10 | I14-11 | I15-12 | | ... |
| D | | Q0-13 | Q1-MSE | Q3-0 | Q4-1 | Q5-2 | Q6-3 | Q7-4 | Q8-5 | Q9-6 | Q10-7 | Q11-8 | Q12-9 | Q13-10 | Q14-11 | Q15-12 | | ... |
| E | | I0-MSE | I2-0 | I3-1 | I4-2 | I5-3 | I6-4 | I7-5 | I8-6 | I9-7 | I10-8 | I11-9 | I12-10 | I13-11 | I14-12 | I15-13 | | ... |
| F | | Q0-MSE | Q2-0 | Q3-1 | Q4-2 | Q5-3 | Q6-4 | Q7-5 | Q8-6 | Q9-7 | Q10-8 | Q11-9 | Q12-10 | Q13-11 | Q14-12 | Q15-13 | | ... |
| G | | I1-0 | I2-1 | I3-2 | I4-3 | I5-4 | I6-5 | I7-6 | I8-7 | I9-8 | I10-9 | I11-10 | I12-11 | I13-12 | I14-13 | 11-MSE | | ... |
| H | | Q1-0 | Q2-1 | Q3-2 | Q4-3 | Q5-4 | Q6-5 | Q7-6 | Q8-7 | Q9-8 | Q10-9 | Q11-10 | Q12-11 | Q13-12 | Q14-13 | 11-MSE | | ... |

...

16

FIG 4

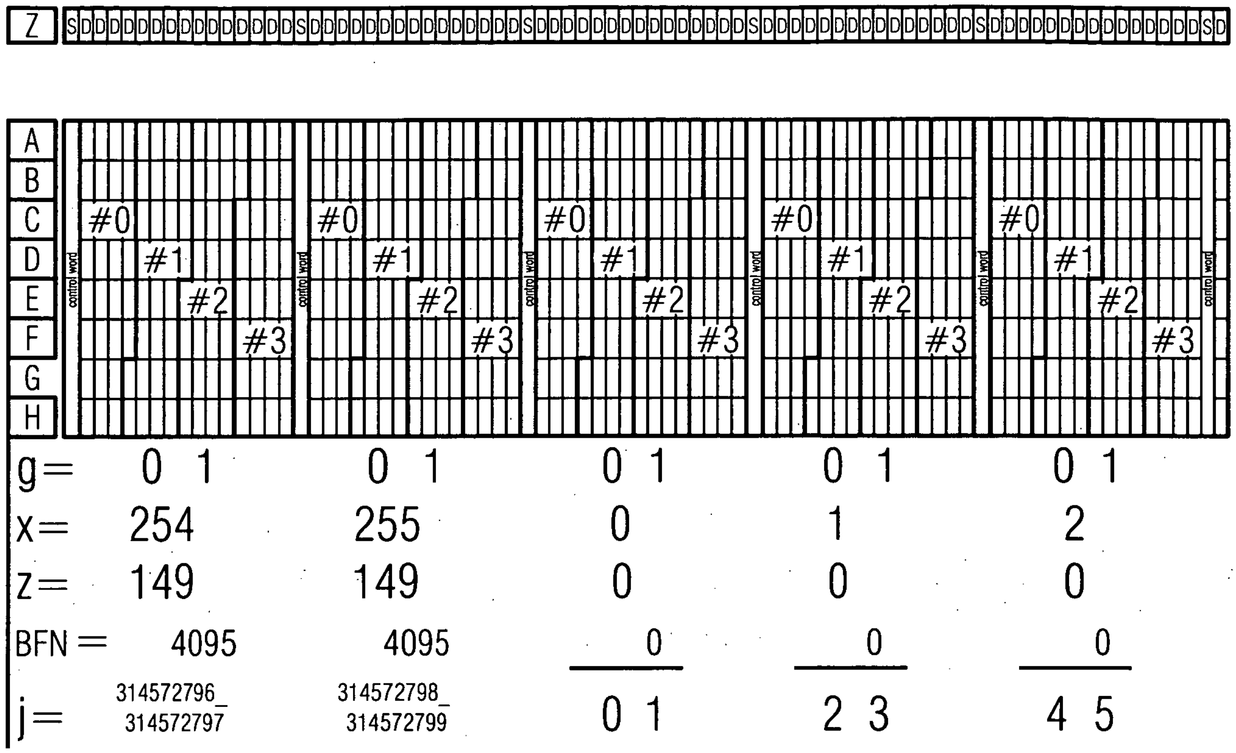
Z
A
B
C
D
E
F
G
H
control word
#0 #1 #2 #3
g= 0 1 0 1 0 1 0 1 0 1
x= 254 255 0 1 2
z= 149 149 0 0 0
BFN = 4095 4095 0 0 0
j= 314572796_ 314572797 314572798_ 314572799 0 1 2 3 4 5

FIG 5

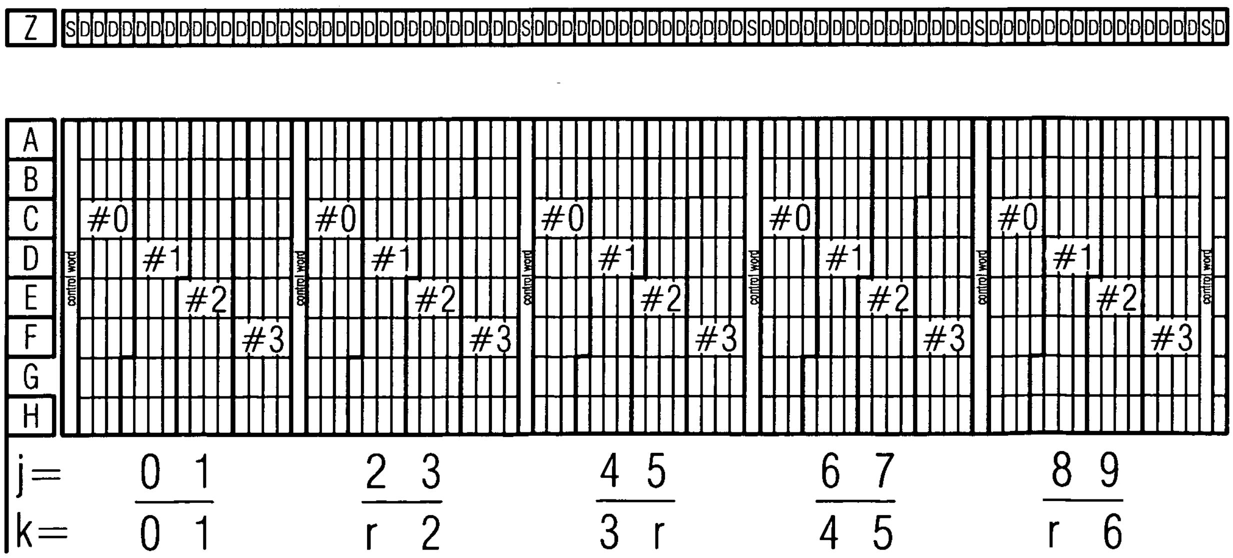
Z
A
B
C
D
E
F
G
H
control word
#0 #1 #2 #3
j= 0 1 2 3 4 5 6 7 8 9
k= 0 1 r 2 3 r 4 5 r 6

FIG 6

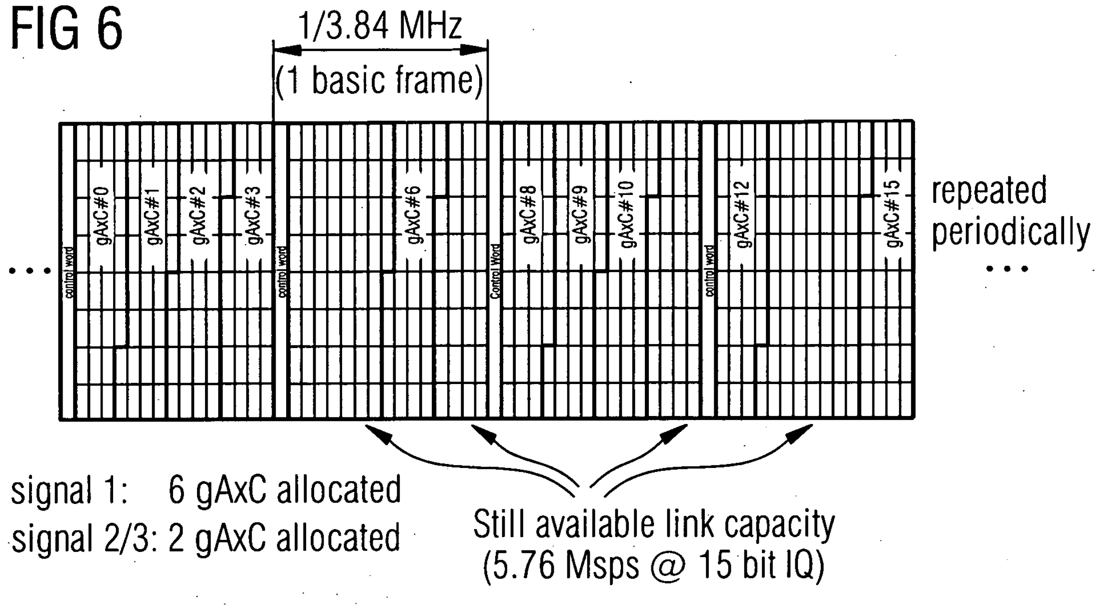
1/3.84 MHz
(1 basic frame)
control word
gAxC#0
gAxC#1
gAxC#2
gAxC#3
control word
gAxC#6
Control Word
gAxC#8
gAxC#9
gAxC#10
control word
gAxC#12
gAxC#15
repeated
periodically
signal 1: 6 gAxC allocated
signal 2/3: 2 gAxC allocated
Still available link capacity
(5.76 Msps @ 15 bit IQ)

FIG 7

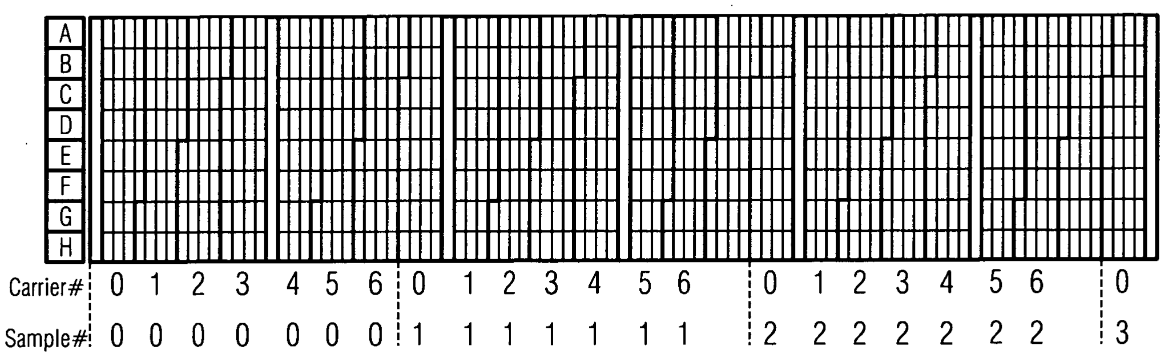
A
B
C
D
E
F
G
H
Carrier# 0 1 2 3 4 5 6 0 1 2 3 4 5 6 0 1 2 3 4 5 6 0
Sample# 0 0 0 0 0 0 0 1 1 1 1 1 1 1 2 2 2 2 2 2 2 3

FIG 8A

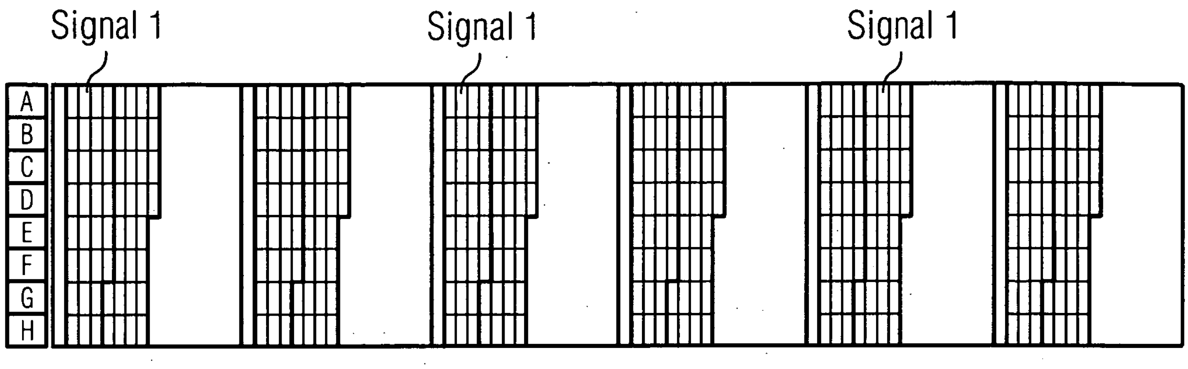


FIG 8B

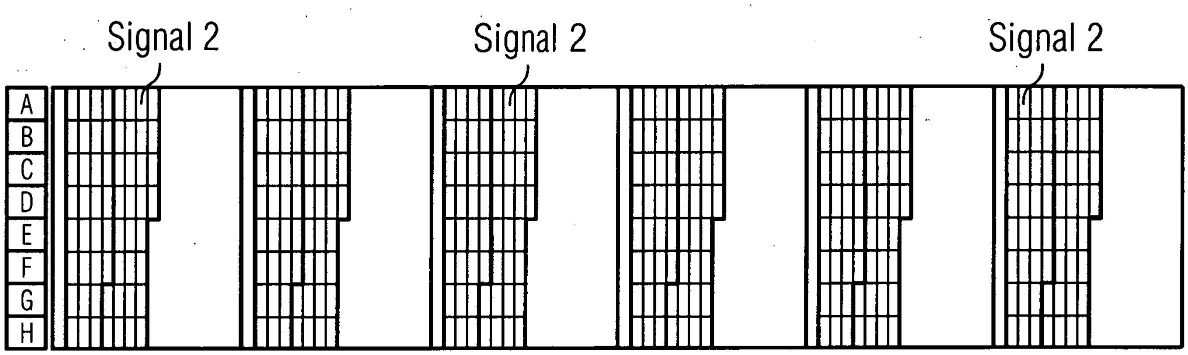


FIG 8C

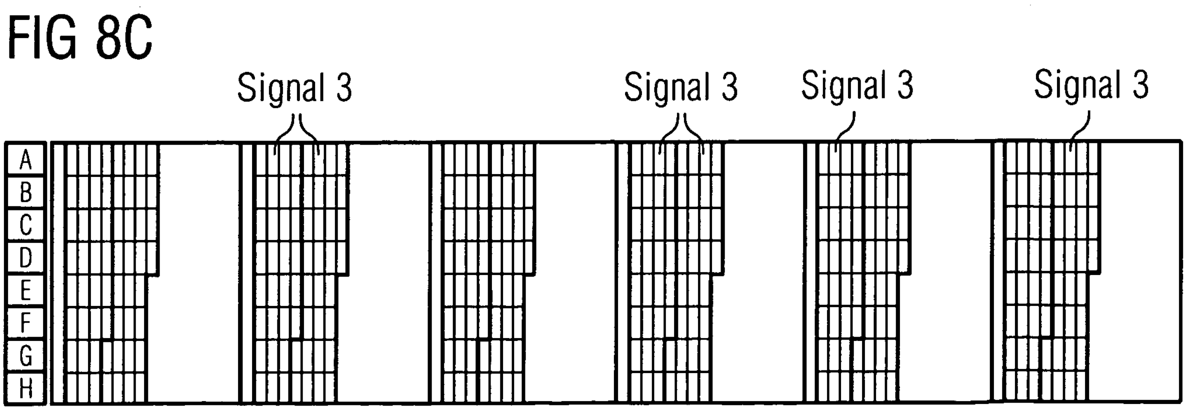

FIG 9A

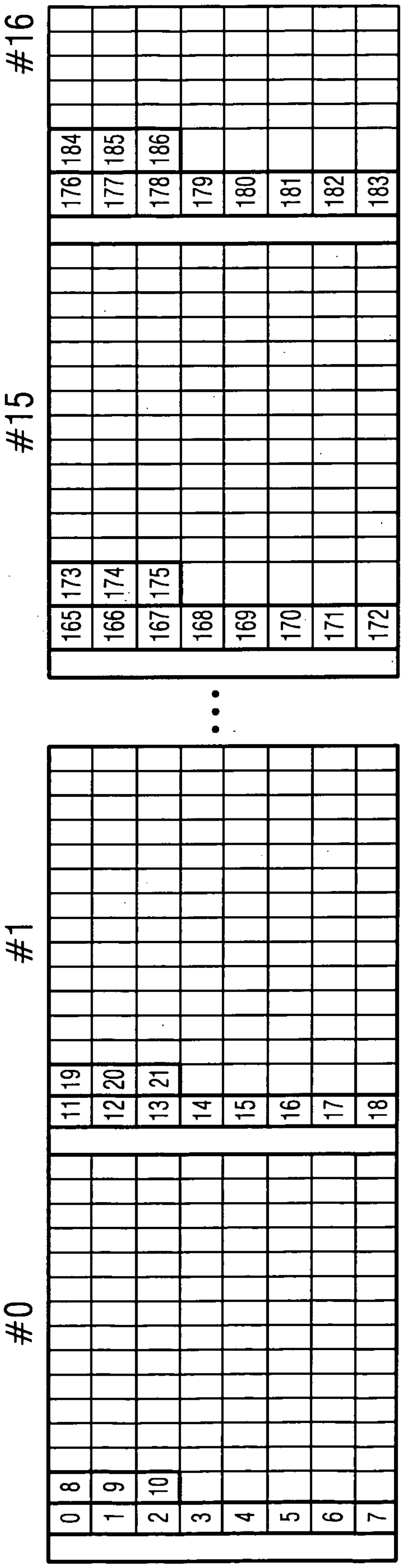
#0
#1
#15
#16
0 1 2 3 4 5 6 7
8 9 10
11 12 13 14 15 16 17 18
19 20 21
165 166 167 168 169 170 171 172
173 174 175
176 177 178 179 180 181 182 183
184 185 186

FIG 9B

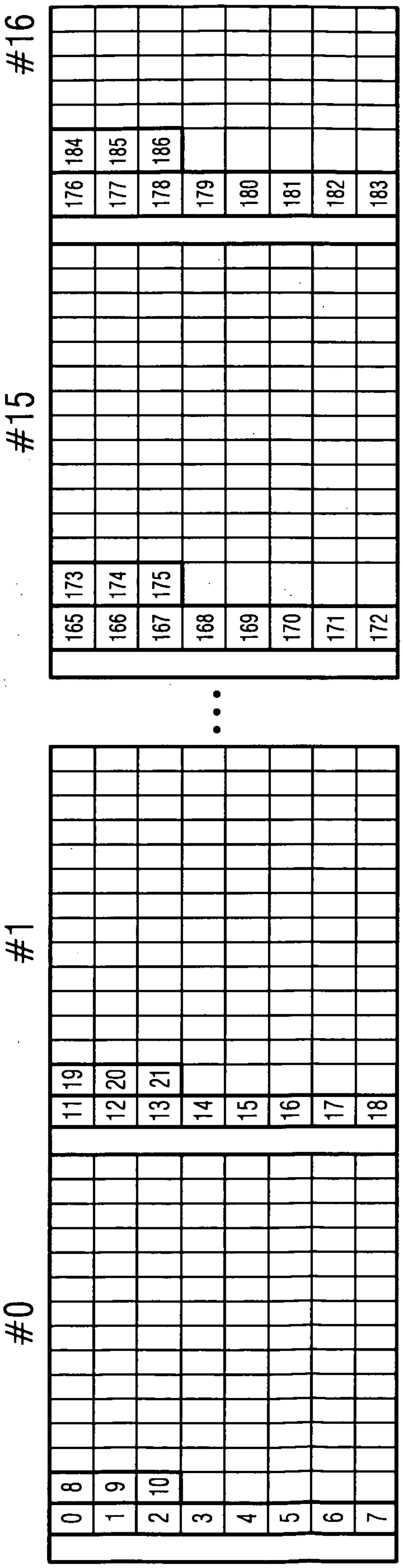
#0
#1
#15
#16
0 1 2 3 4 5 6 7
8 9 10
11 12 13 14 15 16 17 18
19 20 21
165 166 167 168 169 170 171 172
173 174 175
176 177 178 179 180 181 182 183
184 185 186

FIG 9C

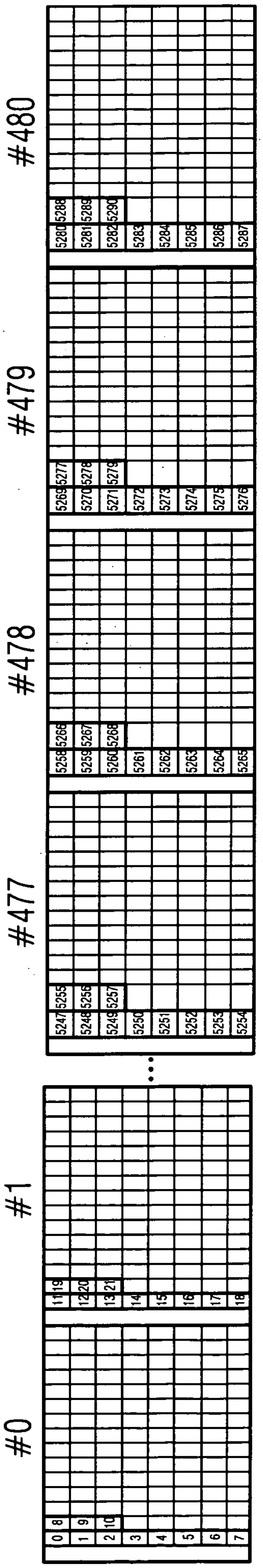
#0
#1
#477
#478
#479
#480
0 8
1 9
2 10
3
4
5
6
7
11 19
12 20
13 21
14
15
16
17
18
5247 5255
5248 5256
5249 5257
5250
5251
5252
5253
5254
5258 5266
5259 5267
5260 5268
5261
5262
5263
5264
5265
5269 5277
5270 5278
5271 5279
5272
5273
5274
5275
5276
5280 5288
5281 5289
5282 5290
5283
5284
5285
5286
5287

FIG 9D

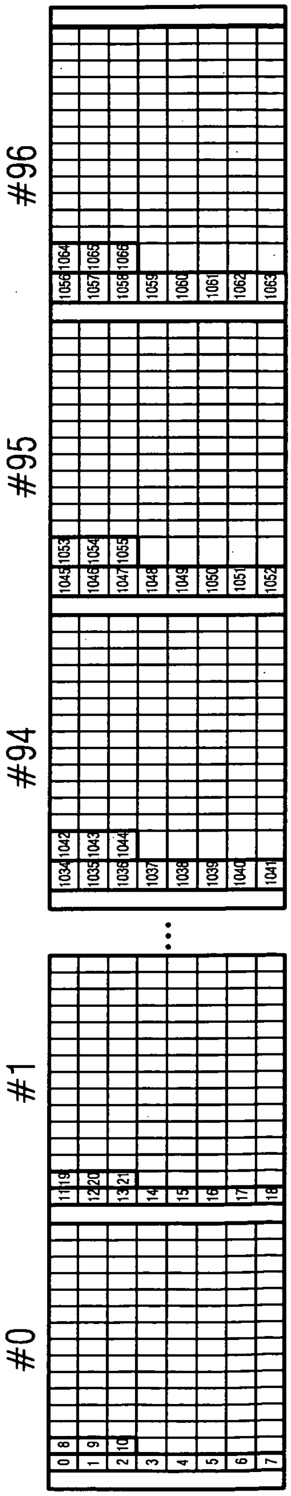
#0
#1
#94
#95
#96
0 8
1 9
2 10
3
4
5
6
7
11 19
12 20
13 21
14
15
16
17
18
1034 1042
1035 1043
1036 1044
1037
1038
1039
1040
1041
1045 1053
1046 1054
1047 1055
1048
1049
1050
1051
1052
1056 1064
1057 1065
1058 1066
1059
1060
1061
1062
1063

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10344278 A1
- EP 0485260 B1
- WO 2005048624 A1
- EP 1052794 A1
- WO 2005048625 A1